# DEMANDE DE BREVET EUROPEEN

(11) **EP 2 315 334 A2**
(43) Date de publication de la demande: **27.04.2011**
(21) Numéro de dépôt: 10290408.3
(22) Date de dépôt: 19.07.2010
(51) Int. Cl.: H02J 7/00

(54) **Système universel pour recharger au moins un appareil portable**

(30) Priorité: 31.07.2009 FR 0903817
(71) Demandeur: Ergylink, 92300 Levallois-Perret (FR)
(72) Inventeur: Gilbert, Jérôme, 92300 Levallois Perret (FR)

(57) **Abrégé**

Système universel pour recharger au moins un appareil portable dont la vocation est de pouvoir, à partir d'un dispositif (4), convenir à tout modèle d'appareil portable par le biais d'au moins un adaptateur (6) pouvant être spécifique en tout ou partie de l'appareil portable considéré. L'invention, dans ses variantes de mise en oeuvre préférées, permet la recharge simultanée ou en séquence d'une pluralité d'appareils portables. L'invention permet en outre d'économiser de l'énergie électrique en veille et diminue de surcroît les risques d'incendie et d'électrocution en cas de dysfonctionnement par rapport aux solutions à l'état de l'art.

## Description

### Domaine technique

La présente invention se situe dans le domaine du petit matériel électrique, elle concerne un accessoire pour recharger au moins un appareil portable. L'invention concerne plus particulièrement la recharge des téléphones et/ou des autres appareils électriques ou électronique portables d'usage quotidien.

### Etat de la technique antérieure

Les chargeurs à l'état de l'art sont le plus souvent des accessoires spécifiques fournis par les constructeurs d'appareils portables. Bien qu'il existe des travaux visant à standardiser l'interface entre les chargeurs et les appareils à recharger pour découpler la fourniture des appareils et des chargeurs, le parc de chargeurs existants est encore hétérogène. Cette hétérogénéité oblige les utilisateurs à conserver et à transporter dans leurs déplacements autant de chargeurs qu'ils ont d'appareils à recharger. D'autre part, dans les familles où la plupart des membres ont un téléphone portable simple ou multifonction et le cas échéant, d'autres appareils portables tels que des lecteurs audio numérique, des appareils photo numériques, des consoles de jeux etc., on assiste à une augmentation significative du nombre de chargeurs. Outre le caractère inesthétique des chargeurs individuels, le fait qu'ils occupent une partie non négligeable des prises murales dans les habitations, cette prolifération conduit à un gaspillage d'énergie électrique qui est significative à l'échelle d'un pays et à une augmentation de la probabilité de sinistres liés aux défaillances des chargeurs.
On connait une multiprise intelligente dite coupe-veille divulguée dans le brevet FR0605627 (GILBERT) du même inventeur dont la présente invention est en quelque sorte une suite ainsi que des chargeurs divulgués dans les brevets US7405535, US7471,062, US5367242 et dans les documents US20090115370 et US2005156577.

### Bref exposé de l'invention

Le but de la présente invention est de remédier au moins partiellement aux problèmes évoqués précédemment en proposant un système universel pour recharger au moins un appareil portable. Certaines variantes préférées de mise en oeuvre de l'invention incluent en outre des moyens de déconnection au moins partielle du réseau électrique lorsque tous les appareils sont considérés comme rechargés ou qu'ils sont retirés du système. Ceci permet de diminuer, voir dans certains types de mise en oeuvre, de supprimer complètement la consommation résiduelle en fin de charge ou lorsque le chargeur est déconnecté de l'appareil à recharger. L'invention permet en outre de diminuer le risque d'incendie et/ou de réduire le risque d'électrocution en cas de dysfonctionnement par rapport aux solutions à l'état de l'art. L'invention est utile pour ses utilisateurs par les avantages qu'elle leur procure en termes de commodité d'usage, d'économie et de sécurité. L'invention est utile aussi pour les constructeurs d'appareils électroniques portables en ce qu'elle peut contribuer au transfert de la fourniture des chargeurs à des fournisseurs spécialisés dans le petit matériel électrique. L'invention leur permet de proposer des produits attractifs et innovants dans le domaine du chargeur et des produits qui sont potentiellement aptes à convenir à toutes les marques d'appareils portables. En effet, les chargeurs sont des objets à faible valeur ajoutée, peu technologiques et sans enjeu marketing pour les constructeurs d'appareils électroniques portables. Se séparer de cette fourniture leur permet de diminuer leurs coûts, de réduire l'encombrement et le poids de leurs emballages et de limiter les risques auxquels ils sont exposés. Les risques en cas de dysfonctionnement des chargeurs peuvent avoir des conséquences financières importantes pour les entreprises et un impact négatif sur l'image des marques généralement notoires sous lesquelles les appareils sont vendus.

### Brève description des dessins

D'autres avantages et caractéristiques de l'invention apparaîtront à l'examen de la description détaillée de modes de mise en oeuvre nullement limitatifs, et des dessins annexés où :
- la figure 1 illustre l'architecture du système selon l'invention;
- la figure 2 illustre la structure interne de la variante préférée du dispositif;
- la figure 3 illustre une première variante de l'invention;
- la figure 4 illustre la première variante avec des adaptateurs connectés;
- la figure 5 illustre la première variante dans un autre style;
- la figure 6 illustre la variante préférée de l'invention;
- la figure 7 illustre la variante préférée avec les adaptateurs connectés;
- la figure 8 illustre la variante préférée dans le style préféré;
- la figure 9 illustre une troisième variante de l'invention en un seul bloc;
- la figure 10 illustre une troisième variante de l'invention en deux blocs;
- la figure 11 illustre la troisième variante de l'invention vue de dessous;
- la figure 12 illustre une quatrième variante de l'invention;
- la figure 13 illustre la quatrième variante avec câbles simples;
- la figure 14 illustre la quatrième variante avec câbles à enrouleur;
- la figure 15 illustre des variantes de câbles du premier sous-ensemble;
- la figure 16 illustre un câble avec autre connecteur et autre tension;
- la figure 17 illustre un changeur de type de connecteur et de tension;
- la figure 18 illustre ledit second sous-ensemble, recharge par contacts;
- la figure 19 illustre ledit second sous-ensemble, recharge par induction;
- la figure 20 illustre un premier appareil portable dans son sous-ensemble;
- la figure 21 illustre un second appareil portable avec sous-ensemble;
- la figure 22 illustre un troisième appareil portable avec sous-ensemble;
- la figure 23 illustre un quatrième appareil portable avec sous-ensemble;
- la figure 24 illustre un cinquième appareil portable dans une orientation;
- la figure 25 illustre le cinquième appareil portable dans un autre sens;
- la figure 26 illustre un premier mode de réalisation du système;
- la figure 27 illustre un second mode de réalisation du système;
- la figure 28 illustre un troisième mode de réalisation du système;
- la figure 29 illustre un quatrième mode de réalisation du système;
- la figure 30 illustre un système avec des interfaces amovibles;
- la figure 31 illustre un système plan comprenant une surface de pose;
- la figure 32 illustre un premier système de recharge universel séquentiel;
- la figure 33 illustre un second système de recharge universel séquentiel;

### Exposé détaillé de l'invention

L'invention porte sur un système universel pour recharger au moins un appareil portable qui comprend :
- Un dispositif pour recharger au moins un appareil portable par la fourniture d'énergie électrique; et
- Au moins un adaptateur pour transférer de manière discontinue de l'énergie électrique dudit dispositif à l'au moins un appareil portable.

On entend par universel dans le cadre du système selon l'invention, l'aptitude à recharger des appareils portables de types et/ou de modèles et/ou de marques et/ou provenant de constructeurs différents moyennant le cas échéant des adaptations appropriées à des spécificités des appareils portables considérés.
L'invention dans ses modes de réalisation préférés prévoit le support et/ou la recharge de plusieurs appareils portables de manière simultanée et/ou séquentielle. On entend par le support de plusieurs appareils portables de manière simultanée et/ou séquentielle la capacité à recevoir une pluralité d'appareils portables pour les recharger respectivement en même temps ou tour à tour. On entend par la recharge de plusieurs appareils portables de manière simultanée et/ou séquentielle la capacité à transférer de l'énergie électrique à une pluralité d'appareils portables pour les recharger respectivement en même temps ou, pour tout ou partie d'entre eux, selon tout procédé de gestion qui prenne en compte le temps.
Cela étant on ne sort pas du cadre de l'invention dans le cas d'une mise en oeuvre dédiée exclusivement à la recharge d'un seul appareil portable d'un modèle donné ou dans le cas d'une mise en oeuvre dédiée à tout ou partie d'une gamme d'appareils portables d'une marque donnée.
On entend par adaptateur pour transférer de l'énergie dudit dispositif à l'au moins un appareil portable, tout moyen assurant le transfert d'énergie entre ledit dispositif et l'au moins un appareil portable à recharger. Il faut entendre par transférer de manière discontinue de l'énergie électrique dudit dispositif à l'au moins un appareil portable le fait que la tension de recharge n'est pas fournie par le dispositif à l'au moins un appareil portable à recharger de manière permanente. Ceci quelle que soit la forme d'onde de la tension de recharge qui peut être alternative ou dans la plupart des cas continue. Il est à noter que le système selon l'invention gère, dans la plupart des variantes de mise en oeuvre et dans la limite des capacités maximales de fourniture de courant des sources considérées, seulement la fourniture de la tension de recharge. En effet, lorsqu'il s'agit d'appareils portables évolués tels que des téléphones portables comprenant un superviseur de charge, la gestion du courant de recharge appelé par l'appareil est géré par ce dernier. Outre le fait que la caractéristique de fourniture discontinue de la tension de recharge est à la base d'au moins une partie des avantages de l'invention, elle contribue également à la distinguer des solutions connues, notamment de celles utilisées pour la recharge des téléphones sans fil domestiques qui sont alimentés continument par leur base. Il est à noter que l'invention prévoit de mettre en oeuvre la gestion de la discontinuité de la fourniture de la tension de recharge à l'au moins un appareil portable en un ou plusieurs points du système. Par exemple la discontinuité peut être traitée en tout ou partie dans ledit dispositif et/ou dans ledit adaptateur sans sortir du cadre de l'invention.

L'invention prévoit que le système comprend en outre des moyens de guidage et/ou de maintien spécifiques ou adaptables aux dimensions de l'au moins un appareil portable pour assurer un positionnement de ce dernier qui soit apte à la recharge.
Il est prévu que le système selon l'invention comprenne des moyens pour recharger au moins un appareil portable parmi une pluralité présentant des caractéristiques dimensionnelles et/ou électriques différentes.
La gestion de cette hétérogénéité nécessite des moyens appropriés. Ainsi sont prévus des moyens de guidage et/ou de maintien de l'au moins un appareil portable pour pouvoir recevoir des appareils et les maintenir dans une position apte à la recharge dans un logement en creux et/ou sur un support proéminent. Selon les variantes de mise en oeuvre de l'invention, tout ou partie de ces moyens sont compris dans ledit dispositif et/ou dans ledit adaptateur. Il peut s'agir de moyens d'adaptation qui sont spécifiques à un appareil portable donné ou à une famille d'appareils portables donnée présentant des caractéristiques identiques, au moins pour la partie concernée par la recharge. Il peut s'agir encore plus avantageusement de moyens adaptables aptes à recevoir une pluralité d'appareils portables ayant au moins une caractéristique dimensionnelle différente. Ainsi il est prévu que lesdits moyens adaptables utilisent des forces s'exerçant sur au moins deux appareils portables ayant au moins une caractéristique dimensionnelle différente, lesdites forces s'exerçant sur l'appareil portable proprement dit seul et/ou sur un adaptateur intermédiaire, pour assurer le guidage et/ou le maintien respectivement vers la , et/ou en position de charge. Lesdites forces sont par exemple la gravité, des forces de rappel d'au moins un ressort travaillant en traction et ou en compression ou encore exercées par des matériaux formant ressort, des forces d'attraction ou de répulsion magnétique. Lesdites forces étant utilisées seules ou en combinaison.

L'invention prévoit que le système comprend en outre au moins un enrouleur de câble et/ou un logement pour dissimuler la longueur excédentaire d'au moins un câble.
Il est prévu que le système selon l'invention comprenne des moyens techniques pour dissimuler la longueur excédentaire d'au moins un câble. Ceci concerne ledit dispositif et/ou ledit adaptateur et répond principalement à des besoins de commodité et/ou d'ordre esthétique. Les longueurs de câble à dissimuler peuvent concerner par exemple plus particulièrement ledit dispositif s'il s'agit d'un câble de liaison avec une source d'énergie externe. Les longueurs de câble à dissimuler peuvent concerner aussi au moins un câble dans le cadre de l'au moins un adaptateur pour l'une et/ou l'autre interface de liaison avec le dispositif ou avec l'au moins un appareil portable. Il est en outre prévu que les moyens techniques pour dissimuler au moins une longueur de câble excédentaire peuvent reposer sur des enrouleurs. Il peut s'agir d'enrouleurs dits automatiques par l'utilisation d'un ressort pour exercer une force permettant l'enroulement du câble ou encore d'enrouleurs simples c'est-à-dire de moyens permettant à l'utilisateur d'enrouler lui-même les longueurs excédentaires. Il est également prévu des solutions de dissimulation d'excédent de longueur de câble basées sur des logements appropriés. Il peu s'agir par exemple d'un logement de rétention prévu entre le point de raccordement du câble concerné et le point de sortie du câble de l'enveloppe extérieure de l'objet concerné. Ainsi, avec un simple point de sortie laissant le câble libre de coulisser il est possible de rentrer dans le logement de rétention la partie excédentaire du câble. Il suffit en général de tirer sur le câble dont une partie a été préalablement dissimulée dans le logement pour allonger la partie externe. Lorsque ledit logement est commun pour la rétention de la partie excédentaire de plusieurs câbles, il est avantageux de prévoir un accès pour désenchevêtrer leur partie excédentaire le cas échéant. Pour tous les types d'enrouleurs ou de solutions reposant sur un logement pour contenir la partie excédentaire d'au moins un câble, la mise en oeuvre de moyens de blocage permet avantageusement de maintenir la partie enroulée en place sans qu'elle se déroule d'elle même et de maintenir libre de toute force de rappel la longueur de la partie terminale que l'utilisateur à choisi de laisser libre.

L'invention prévoit que le système comprend en outre une surface de pose pour recevoir les appareils portables à recharger.
On entend par surface de pose, toute surface plane sur laquelle l'utilisateur est invité à poser l'au moins un appareil portable pendant sa recharge. La surface de pose selon l'invention peut être rigide, flexible ou avantageusement réalisée dans des matériaux souples pour permettre un conditionnement compact dans lequel la surface de pose appelée dans ce cas « tapis de charge » peut être roulée. La surface de pose est avantageusement réalisée dans un matériau mou, antidérapant et non abrasif pour ne pas abîmer les appareils portables qu'elle reçoit. Avantageusement la surface de pose offre une surface apte au marquage à des fins décoratives et/ou en tant que support de communication notamment publicitaire. Tout ou partie des marquages pouvant dans certaines variantes être réalisés par l'utilisateur sous forme d'options décoratives par des moyens appropriés et/ou il peut s'agir d'une ou plusieurs zones prévues pour écrire des messages et/ou pour marquer le nom des utilisateurs auxquels sont affectées des zones de pose déterminées le cas échéant avec avantageusement un moyen d'écriture effaçable.
L'invention prévoit dans certaines variantes de mise en oeuvre que la surface de pose soit un composant passif du système dont la fonction essentielle soit un support approprié pour les appareils portables à recharger. Dans d'autres variantes de mise en oeuvre, la surface de pose offre en outre une fonction de détection automatique d'au moins un effet d'une intervention de l'utilisateur sur le système ou dans son environnement. Ce type de variante est prévu en tant qu'accessoire optionnel connectable au dispositif et pouvant être distribué séparément. Dans ce cas, des moyens de mise en marche classiques tels qu'un bouton poussoir sur le dispositif permettent d'utiliser le dispositif selon l'invention sans ladite surface de pose. Dans des variantes préférées de mise en oeuvre, ladite surface de posé est en outre utilisée comme moyen pour transférer de l'énergie électrique dans l'au moins un appareil portable.

Il est prévu que les moyens pour transférer de l'énergie électrique dans les appareils portables posés sur ladite surface de pose exploitent la conduction électrique directe ou le transfert d'énergie par induction. En ce qui concerne le transfert par contact électrique direct, il peut s'agir par exemple de contacts ponctuels fait par exemple d'une ou plusieurs pointes conductrices par pôle, les pointes étant montées rétractables avec ressort ou utilisant un matériau formant ressort pour exercer une force vers la plage d'accueil du contact opposé qui est en relation avec un appareil portable. Ainsi l'au moins deux plages d'accueil métalliques formant les contacts opposés à ceux qui sont solidaires de ladite surface de pose pour le transfert direct d'énergie électrique, peuvent être lisses et en continuité avec la surface qui se trouve généralement former le dos de l'appareil portable ou d'un sur-habillage. Ainsi l'esthétique de l'appareil portable n'est pas sensiblement modifiée et aucune aspérité ne risque de griffer des personnes, des surfaces ou des vêtements. Dans d'autres variantes de réalisation de transfert d'énergie par contacts électriques directs, il est prévu que ladite surface de pose est au moins en partie constituée d'une pluralité de bandes ou de zones métalliques dont la longueur et la largeur sont sensiblement égales pour former une alternance de pôles de l'alimentation à très basse tension respectivement à une ou à deux dimensions. Ainsi, chaque bande ou zone individuelle a au moins respectivement une bande ou une zone adjacente raccordée au pôle opposé de sorte que les contacts solidaires des appareils portables à recharger ou de leur sur-habillage, qui sont écartés d'un multiple impaire du pas d'écartement des dites bandes ou zones, se trouvent presque toujours immédiatement au contact des deux pôles dans une position apte à la recharge.
Dans d'autres variantes de réalisation préférées de l'invention, le transfert d'énergie se fait par induction au moyen d'au moins un inducteur plat, dit primaire, qui est situé sous la surface de pose. Au moins une pièce polaire réalisée dans un matériau, apte à dévier les lignes du champ magnétique alternatif utilisé, complète avantageusement l'au moins inducteur primaire pour augmenter l'efficacité du couplage avec l'au moins un inducteur secondaire recevant l'énergie situé dans l'appareil portable ou dans son adaptateur qui est posé au dessus.
Avantageusement, des zones de pose dédiées à un appareil portable donné sont matérialisées par des marquages, cette disposition de mise en oeuvre permet une gestion individualisée de la recharge de chaque appareil et, le cas échéant, une reconnaissance aisée de l'utilisateur de chaque appareil portable qui est utile en particulier dans le cadre des fonctions vocales de l'invention présentées ci-après.
Un voyant par appareil, par adaptateur ou par circuit de charge individualisé complète avantageusement le système en ce qu'il permet de contrôler instantanément, lors de la pose, que l'appareil est dans une position apte à la recharge : le non allumage du voyant invitant intuitivement l'utilisateur à modifier la position de l'appareil jusqu'à constater l'allumage du voyant. Dans les cas où les moyens utilisés pour transférer l'énergie électrique ne permettent pas de déterminer de manière certaine la polarité de la connexion établie avec l'appareil portable ou son adaptateur, il est prévu que des diodes soient montées en pont redresseur dans l'adaptateur ou dans l'appareil portable pour reconditionner de manière certaine comme attendue la polarité de la tension de recharge avant son utilisation. En outre, la tension fournie par le dispositif sera adaptée pour tenir compte de la chute de tension des diodes pour que l'appareil portable reçoive la tension nominale de recharge appropriée.
Dans le langage de l'invention, l'utilisation de ladite surface de pose pour transférer l'énergie pour la recharge la fait entrer dans la catégorie dudit premier sous-ensemble de l'au moins un adaptateur.
Bien entendu tout ou partie des fonctions unitaires associées à ladite surface de pose peuvent être combinées sans sortir du cadre de l'invention.

L'invention prévoit que le système comprend en outre des moyens pour enregistrer et/ou pour reproduire et/ou pour gérer des messages vocaux.
Compte tenu de l'utilisation particulièrement pertinente du système selon l'invention dans le grand public en tant que point de recharge centralisé des appareils portables d'usage quotidien, qu'en conséquence la localisation la plus appropriée du système dans une entrée ou autre endroit de passage systématique des utilisateurs, il est particulièrement avantageux d'inclure dans le système selon l'invention des moyens pour enregistrer et/ou pour reproduire et/ou pour gérer des messages vocaux. Il est prévu que l'association technique entre la partie vocale et les composants du système liés à la recharge des appareils portables selon l'invention fasse naitre des synergies fonctionnelles. Par exemple le ou les messages non encore écoutés peuvent être lus automatiquement lors de toute mise en charge d'un appareil portable postérieure aux enregistrements jusqu'à effacement de tous les messages, chaque destinataire étant réputé effacer le message lui étant destiné après écoute. Bien entendu de nombreuses variantes fonctionnelles sont possibles sans sortir du cadre de l'invention.
Il est prévu dans une version de base que les moyens vocaux reposent sur une simple fonction d'enregistrement et de reproduction globale, sans distinction de destinataire. Il est cependant prévu dans les variantes préférées de mise en oeuvre, une gestion des destinataires des messages vocaux. Dans ce cas des moyens sont proposés pour sélectionner le ou les destinataires des messages vocaux lors des étapes d'enregistrement et de reproduction. Des moyens d'interaction avec l'utilisateur sont en outre proposés pour gérer les messages : par exemple choisir le destinataire le cas échéant lors de l'étape d'enregistrement, réécouter, effacer, passer au message suivant ou précédent, en début ou en fin de liste, signaler un nouveau message avec le cas échant indication de son destinataire etc. Une fonction supplémentaire avantageuse est la fonction « répondre » pour enregistrer un nouveau message à destination de l'émetteur du message venant d'être écouté, ceci permettant d'instaurer un dialogue entre des utilisateurs non présents simultanément. L'interaction avec l'utilisateur peut se faire avantageusement avec des moyens très simples et fiables dont l'usage est aisément compréhensible pour quiconque comme par exemple avec des boutons poussoirs, des voyants lumineux et des marquages associés. L'interaction avec l'utilisateur peut bien entendu utiliser des moyens plus sophistiqués comme par exemple un écran tactile. Il est aussi prévu d'utiliser l'au moins un appareil portable comme support de l'interaction avec l'utilisateur, la liaison entre les ressources du système selon l'invention et celle de l'appareil portable pouvant avantageusement utiliser un standard de communication locale comme Bluetooth ou WiFi. A l'inverse, il est aussi prévu d'utiliser les ressources de la partie vocale du système comme sous ensemble main libre par un téléphone pour partager une communication entre plusieurs utilisateurs. Les messages vocaux enregistrés sous forme numérique seront avantageusement stockés dans une mémoire non volatile. L'ajout facultatif d'une horloge temps réel permet un horodatage des messages vocaux. La partie vocale du système peut avantageusement être proposée sous la forme d'un sous-ensemble détachable, capable d'autonomie par la présence d'un accumulateur maintenu en charge par le dispositif selon l'invention. La variante capable d'autonomie est particulièrement utile pour enregistrer des listes d'articles à approvisionner tout en faisant l'inventaire dans différents lieux de stockage avec ledit sous-ensemble vocal en main, détaché du dispositif. Dans une variante particulièrement élaborée, la partie vocale du système est apte à copier les messages vocaux sous la forme de fichiers numériques dans un format standard dans une mémoire d'un appareil portable pour une reproduction en mobilité par exemple dans le cadre d'une liste d'articles à approvisionner que l'on peut ainsi consulter en temps différé sur le lieu d'approvisionnement. Dans certaines variantes, la partie vocale comprend un port, par exemple un port USB hôte, OTG ou équivalent ainsi qu'un gestionnaire de fichier dans le cadre de la reconnaissance de la connexion de mémoires de masse standards pour gérer des transferts de contenus entre différents appareils dont possiblement des fichiers joints non vocaux non exploités dans le cadre du système selon l'invention. Un lecteur de carte mémoire amovible dans un format standard est compris dans ladite partie vocale le cas échéant en complément ou en remplacement d'un port pour permettre des échanges de fichiers avec des équipements externes. Dans une variante encore plus sophistiquée, le système selon l'invention est connecté à au moins un réseau extérieur, directement par des moyens de connexion internes ou par l'intermédiaire d'une passerelle assurant la connexion à Internet à laquelle le système selon l'invention peut avantageusement se connecter par des moyens de transmission tels que WiFi ou Bluetooth ou leurs successeurs. Ainsi il est possible dans d'utiliser la partie vocale du système selon l'invention en tant que centre de messagerie inter opérant avec la plupart des appareils portables et sédentaires communicants et avec des services ouverts ou spécifiques des opérateurs télécom. Il est prévu dans certaines variantes que lesdites fonctions vocales du système selon l'invention comprennent en outre les fonctions d'un micro-commutateur téléphonique classique ou utilisant les techniques de voix sur IP. La fonction d'un répondeur-enregistreur téléphonique de base est bien entendu supportée mais nombre de fonctions annexes sont possibles dans le cadre du système. Ainsi la présence d'un téléphone portable donné peut être identifiée par le dispositif selon l'invention qui peut transmettre cette information exploitable dans le cadre de services télécom sophistiqués, avantageusement multimodaux, comprenant par exemple le re-routage dynamique des communications téléphonique, la mise à jour d'informations dans des réseaux sociaux auquel l'utilisateur concerné a souscrit sur Internet etc. Il est de surcroît prévu d'embarquer un micro serveur web dans ladite partie vocale du système pour faciliter notamment la configuration du système au moyen d'un navigateur web standard exécutable sur tout appareil portable ou sédentaire connectable, en local ou à distance.

L'invention prévoit que le système comprend en outre des moyens pour reconnaitre automatiquement le destinataire d'un message vocal lors de la mise en charge de l'appareil portable qui lui est associé, la mise en charge de l'appareil portable provocant en outre la lecture automatique d'au moins un message vocal préalablement enregistré à l'intention du destinataire reconnu. Dans un mode de réalisation particulièrement préféré, le système selon l'invention comprend en outre des moyens pour reconnaitre automatiquement l'appareil portable lors de sa mise en charge. Par une étape de configuration préalable permettant au système d'associer ultérieurement l'appareil portable et son utilisateur, les moyens de reconnaissance de l'appareil portable permettent de reconnaître automatiquement l'utilisateur associé à l'appareil portable. Les informations relatives à l'association sont mémorisées dans une mémoire non volatile comprise dans le système au cours de l'étape de configuration. Tous les moyens permettant à l'appareil portable d'être reconnu lors de sa mise en charge entrent dans le cadre de l'invention. Il peut s'agir par exemple d'un transpondeur solidaire de l'appareil portable et qui communique un numéro d'identification unique sans contacts au lecteur approprié compris dans le système, il peut s'agir aussi par exemple de la lecture et de la reconnaissance de paramètres obtenus par un échange de données avec l'appareil portable.

L'invention prévoit que le dispositif comprend en outre des moyens pour déconnecter au moins une alimentation utilisée pour recharger l'au moins un appareil portable lorsque l'au moins un appareil portable en relation avec l'au moins une alimentation considérée n'est pas en charge ou que sa recharge est considérée comme terminée.
La discontinuité dans la fourniture de la tension de recharge à l'au moins un appareil portable est ici traitée dans ledit dispositif selon l'invention. Elle repose sur des moyens de commutation permettant de commander la transmission d'énergie électrique fournie par la source externe, et/ou interne le cas échéant, aux moyens de charge. Selon les variantes de mise en oeuvre, la commande peut être traitée de manière globale pour tous les moyens de charge ou différenciée en fonction des moyens de charge considérés; par exemple selon qu'il s'agit d'une source d'alimentation interne pour la recharge des appareils portables ou de chargeurs externes au dispositif. Dans d'autres variantes de mise en oeuvre, la différenciation dans la commande de la transmission d'énergie est faite par appareil portable ou par groupe d'appareils portables. Dans le mode de réalisation le plus préféré, la discontinuité est gérée de manière globale par déconnexion de la source d'énergie qui dans la majorité des cas est le réseau électrique basse tension d'un bâtiment. Dans ce type de mise en oeuvre, ne reste sous tension permanente qu'une première alimentation interne qui présente avantageusement les caractéristiques techniques d'une très faible consommation active en veille, d'une grande robustesse vis-à-vis des perturbations pouvant affecter la source d'énergie externe et une grande longévité en alimentation permanente. Un mode de réalisation poussant à l'extrême ces avantages repose sur une déconnexion intégrale de la source d'énergie externe par un relais assurant en outre le maintient de l'alimentation pendant la charge. Ce mode de réalisation nécessite une commande de mise en marche qui se matérialise par la fermeture momentanée d'un contact monté en parallèle sur celui ou ceux du relais pour démarrer le processus de recharge. Le circuit de commande du relais assure la gestion du maintien de l'alimentation pendant la charge et la déconnexion automatique lorsque les conditions sont réunies.

L'invention prévoit que le dispositif comprend en outre une temporisation additionnelle de maintien en charge qui diffère l'instant de la déconnexion effective à partir de l'instant de la détection des conditions de la déconnexion. Il est prévu qu'une temporisation additionnelle de maintien en charge soit ajoutée entre l'instant de la détection du passage en dessous du seuil de puissance correspondant à des appareils portables considérés comme tous chargés ou pas en charge et l'instant de l'ouverture du contact du relais conduisant à la déconnection de l'alimentation interne et des éventuels chargeurs externes de la source d'alimentation externe. Cette temporisation permet notamment de compenser dans certains cas l'absence de possibilité de mesure de la puissance consommée par les appareils portables en fin de charge en ce qu'elle assure le maintien de l'alimentation des chargeurs jusqu'à une fin certaine de la recharge.

L'invention prévoit que le dispositif déconnecte automatiquement l'au moins une alimentation utilisée pour recharger l'au moins un appareil portable lorsque la puissance consommée par la charge correspondante dépasse un seuil préalablement déterminé.
L'invention prévoit que la mise en oeuvre d'une capacité de déconnexion des charges dans le dispositif ainsi que des moyens pour mesurer une grandeur représentative de la puissance soit avantageusement complétée par la comparaison à un seuil déterminé qui en cas de dépassement provoque la déconnexion des dites charges. Le dispositif est ainsi protégé contre les conséquences de tout dysfonctionnement des charges qui lui sont extérieures comme par exemple un court circuit dans un chargeur externe, dans un accumulateur ou dans un appareil portable. Ce mode de protection diminue en outre la probabilité qu'une défaillance dans un élément extérieur au dispositif provoque un incendie en ce que la quantité d'énergie dissipée dans l'élément défaillant est limitée.

Il est également prévu que ledit dispositif comprend en outre des moyens pour recharger l'au moins un appareil portable par la réception d'une commande et/ou par la détection automatique de la mise en charge d'au moins un appareil portable.
Il est prévu qu'une commande de la part de l'utilisateur soit nécessaire dans les variantes de mise en oeuvre de l'invention les plus économiques offrant néanmoins la plupart des avantages précités. Dans des variantes plus élaborées, il est prévu des moyens pour détecter l'arrivée d'un appareil portable en situation d'être rechargé pour démarrer automatiquement le processus de recharge. De nombreuses solutions existent pour se faire, par exemple au moyen d'un contact sur le support d'appareil, par capteur optique, magnétique à effet Hall ou par contact ILS, par détection de la présence d'une charge dans le circuit de recharge etc.

L'invention prévoit que ledit dispositif comprend en outre des moyens pour automatiser la recharge périodique d'au moins un appareil portable. L'invention prévoit que dans le cadre de certaines mises en oeuvre, les moyens de contrôles compris dans le dispositif démarrent automatiquement le processus de recharge périodiquement pour entretenir l'état de la charge des appareils. Dans des modes de mise en oeuvre de l'invention particulièrement sophistiqués, il est prévu de rendre cette fonctionnalité configurable et/ou auto adaptative en ce qui concerne la périodicité des relances automatiques.

Il est aussi prévu que ledit dispositif comprend en outre des moyens pour recharger au moins un accumulateur d'énergie électrique en tant que tel et/ou au moins un appareil portable simple comprenant un accumulateur d'énergie électrique et ne comprenant pas de superviseur de charge.
Les variantes de mise en oeuvre de l'invention pour recharger une pluralité d'appareils portables prévues pour un usage domestique sont avantageusement complétées par une capacité à recharger des batteries dans les formats les plus courants par l'intermédiaire le cas échéant d'adaptateurs optionnels et/ou des appareils portables simples tels que par exemple une lampe torche dont la source lumineuse est constituée d'une ou de plusieurs leds. Une telle lampe peut encore plus avantageusement être associée au système selon l'invention sur un support approprié permettant une préhension facile et une charge entretenue par des recharges périodiques.

L'invention prévoit que ledit dispositif comprend en outre des moyens pour assurer au moins un mode de recharge accéléré.
L'invention prévoit d'offrir au moins un mode de recharge accéléré pour les accumulateurs d'énergie électrique et les appareils portables simples comprenant un accumulateur d'énergie électrique et ne comprenant pas de superviseur de recharge. Pour ces appareils, il est mis en oeuvre dans le dispositif un algorithme de recharge et/ou un niveau de courant de recharge supérieur aux valeurs nominales pour le type d'accumulateur considéré. La rapidité de la charge étant privilégiée par rapport à la durée de vie des accumulateurs dans le mode accéléré. Un mode accéléré est prévu également pour les autres appareils portables comprenant un superviseur de recharge qui supporte un tel mode. En effet, pour cette catégorie d'appareils, c'est l'appareil lui-même qui détermine le courant appelé. Ainsi il est prévu que le dispositif soit en mesure de fournir un courant de charge supérieur au nominal et signale à l'appareil portable qu'un mode de recharge accéléré est sélectionné pour que se dernier appelle un courant de charge supérieur à la valeur nominale. Les modes de signalisation n'étant pas standardisés, il est prévu dans l'invention des capacités de configuration appropriées pour adapter le comportement de tout ou partie du système selon l'invention aux particularités du ou des appareils portables à recharger.

Il est également prévu que ledit dispositif comprend en outre des moyens de raccordement à une source d'énergie électrique externe, ces moyens comprenant un câble équipé d'au moins un connecteur approprié réalisé par surmoulage.
L'invention prévoit que le dispositif selon l'invention puisse être connecté à une source d'énergie externe. Dans les cas les plus courants de mise en oeuvre de l'invention il s'agit d'un raccordement au réseau électrique domestique, par exemple à un réseau basse tension 230V / 50Hz ou 110V / 60Hz. Dans certains modes de mise en oeuvre de l'invention plus particulièrement adaptés à un usage véhiculaire, le dispositif selon l'invention est raccordé à une source externe de courant continu à très basse tension par exemple à une source en 12V ou 48V convenant à une utilisation dans les voitures, camping-car, camions, bus, bateaux etc. il est également prévus le raccordement à des sources externes de courant continu tels qu'un panneau solaire et le raccordement à une source de courant alternatif pour une utilisation de l'invention dans des moyens de transports collectifs tels que des trains, des avions ou des bateaux. Dans certaines variantes de mise en oeuvre de l'invention le raccordement à plusieurs types de source d'énergie électrique externe est prévu, il est par exemple prévu un moyen de raccordement à un réseau continu très basse tension et un moyen de raccordement à un réseau basse tension alternative. Il est aussi prévu le raccordement à un panneau solaire photovoltaïque en tant que source d'énergie externe.

L'invention prévoit que ledit dispositif comprend en outre une source d'énergie autonome.
L'invention prévoit que le dispositif selon l'invention puisse être connecté à une source d'énergie interne. Dans les cas les plus courants de mise en oeuvre de l'invention il s'agit d'un accumulateur primaire compris dans le dispositif. Cet accumulateur permet, après une phase de recharge nécessitant la connexion du dispositif à une source d'énergie électrique externe à un réseau basse tension alternatif ou à un réseau très basse tension continu de pouvoir recharger en toute autonomie un ou plusieurs appareils portables un nombre de fois déterminé par la capacité dudit accumulateur primaire et de l'état de sa charge. La présence d'un accumulateur dans le dispositif est particulièrement appropriée dans les variantes de l'invention mettant en oeuvre un panneau solaire photovoltaïque en tant que source d'énergie externe.

Il est prévu dans l'invention que ledit dispositif comprend en outre une source d'alimentation à très basse tension unique apte à la recharge d'au moins un appareil portable, la tension de cette source unique étant stabilisée à une valeur la rendant apte à la recharge directe d'au moins un modèle d'appareil portable.
L'invention prévoit que le dispositif comprend une source d'alimentation à très basse tension unique apte à la recharge d'au moins un appareil portable. La tension de cette source d'alimentation unique étant stabilisée à une valeur, par exemple 5V, la rendant apte à la recharge d'au moins un modèle d'appareil portable. Bien que plusieurs valeurs de très basse tension continue puissent convenir aux critères techniques énoncés, par exemple des valeurs comprises entre 3,6V et 14,4V pour lesquelles on trouve couramment des appareils portables à recharger dans les domaines des appareils électroniques ou électroportatifs divers, la valeur de 5V est optimale en ce qu'elle correspond à la tension de recharge en voie de standardisation pour les appareils électroniques portables et qu'il est aisé d'en dériver des valeurs de tension plus basse si nécessaire par des moyens mis en oeuvre dans ledit adaptateur. Dans certaines mises en oeuvre de l'invention, c'est au niveau de ladite source d'alimentation à très basse tension unique qu'est réalisée l'isolation galvanique nécessaire à la sécurité électrique du système.
Il est à noter qu'on ne sort pas du cadre de l'invention si le dispositif comprend plusieurs sources d'alimentations à très basse tension uniques aptes à la recharge d'au moins un appareil portable. Il faut dans ce cas comprendre l'unicité de la source de très basse tension relativement au fait qu'elle soit apte à la recharge de plusieurs appareils portables. Ainsi le dispositif peut comprendre par exemple une première source de tension unique stabilisée à 5 volts et une seconde stabilisée à 14,4V pour couvrir un spectre d'appareils portables plus large avec un seul dispositif selon l'invention. Dans certaines variantes de mise en oeuvre, la polarité du courant de charge ne peut être garantie par la conception de la mécanique et/ou de l'agencement des contacts. Dans ces variantes, une diode de protection contre l'inversion de polarité ou encore des diodes montées en pont redresseur pour assurer une recharge quelle que soit la polarité du courant fourni sont ajoutées dans l'au moins un adaptateur selon l'invention. La présence de diodes en série dans le circuit de charge doit être compensée en amont par une élévation de la tension fournie par ladite source d'alimentation à très basse tension unique. Une élévation de la tension de la source d'une valeur correspondant à la chute de tension des diodes permet d'alimenter l'appareil portable considéré à la tension de charge nominale appropriée.

L'invention prévoit que le dispositif bloque l'alimentation de tout ou partie de l'au moins un appareil portable pour rester dans les limites des capacités de ladite source d'alimentation à très basse tension unique dans le cas d'un besoin de puissance supérieur aux capacités de ladite source d'alimentation à très basse tension unique.
L'invention prévoit que le dispositif ait connaissance de la puissance effectivement appelée ou susceptible d'être appelée par l'ensemble des charges que représentent l'au moins un appareil portable à recharger. Il est prévu que la connaissance de la puissance puisse se faire par tout moyen comme par exemple une mesure du courant effectivement appelé par chaque appareil portable, par une mesure du courant appelé par l'ensemble de l'au moins un appareil portable à la sortie ou à l'entrée de ladite alimentation unique, par la détection de présence d'un appareil portable et l'association de la puissance de recharge nominale qui lui est nécessaire ou le cas échéant de la puissance nécessaire pour une recharge accélérée. Il est prévu que si la demande de puissance en aval dépasse la puissance pouvant être fournie par ladite alimentation unique en amont, le dispositif bloque la fourniture de puissance l'alimentation de tout ou partie de l'au moins un appareil portable pour rester dans les limites de la puissance pouvant être fournie par ladite alimentation unique. Avantageusement, dès que de la puissance se libère consécutivement à la fin de la recharge ou à la déconnexion d'un appareil, le dispositif débloque la fourniture de puissance pour l'alimentation de tout ou partie de l'au moins un appareil portable précédemment mis en attente dans la limite des capacités disponibles. Dans une variante particulièrement élaborée de l'invention, les règles de gestion des priorités entre les appareils et le cas échéant de gestion des options de recharges accélérées relativement à l'utilisation de la puissance d'alimentation disponible sont réglables et/ou configurables.

L'invention prévoit en outre que le dispositif entre dans un mode de recharge séquentiel de tout ou partie de l'au moins un appareil portable lorsque le besoin de puissance dépasse les limites des capacités de ladite source d'alimentation à très basse tension unique.
Il est prévu que, dans une variante de mise en oeuvre particulièrement préférée de l'invention qui est normalement apte à recharger des appareils portables simultanément, si la puissance appelée par l'ensemble de l'au moins un appareil portable dépasse les capacités de ladite alimentation unique alors le dispositif gère la fourniture de puissance à au moins un appareil portable ou à au moins un groupe d'appareils portable de manière séquentielle. On entend par un mode de recharge séquentiel tout procédé de gestion des charges qui prenne en compte le temps. Ainsi par exemple, le dispositif peut recharger simultanément tous les appareils portables qui lui sont raccordés jusqu'à atteindre la capacité maximale de ladite alimentation unique puis mettre en attente les éventuels autres appareils portables ne pouvant être rechargés simultanément. Dans cet exemple dès qu'un appareil portable est rechargé, son alimentation est interrompue du fait du superviseur de recharge compris dans l'appareil portable lui-même ou du fait d'un moyen propre au système selon l'invention. Ainsi au moins un des appareils portables ayant été placés en attente peut se voir allouer la puissance libérée et être automatiquement placé en recharge effective. Il est aussi possible par exemple de répartir dans le temps la puissance disponible en allouant des périodes de recharge d'une durée déterminée à chaque appareil dans une gestion tournante qui maintient continument la puissance totale effectivement appelée par l'au moins un appareil portable à une valeur inférieure ou égale à la capacité maximale de ladite alimentation unique. D'autres algorithmes d'allocation des ressources de ladite alimentation unique sont possibles sans sortir du cadre de l'invention. Dans une variante particulièrement élaborée de l'invention, les règles de gestion de la recharge relatives au temps sont réglables et/ou configurables.

L'invention prévoit que le dispositif est apte à détecter au moins un effet d'une intervention de l'utilisateur dans le système ou dans son environnement de proximité, et que le dispositif est apte à modifier automatiquement son état fonctionnel en conséquence.
Notamment dans le cas d'une alimentation interruptible, d'une alimentation multiple ou d'une alimentation à plusieurs états fonctionnels tels que plusieurs paliers de puissance, le changement d'état fonctionnel du dispositif peut se faire de manière automatique par la détection d'au moins un effet d'une intervention de l'utilisateur dans l'environnement du système. On entend par effet d'une intervention de l'utilisateur dans l'environnement du système, la détection de tout changement détectable consécutif à une action directe ou indirecte de l'utilisateur en relation avec une des parties du système selon l'invention. Il peut s'agir par exemple de la mise dans une situation apte à la recharge d'un appareil portable, d'une détection de contact ou de proximité d'au moins une partie du corps de l'utilisateur. Les exemples non limitatifs suivants illustrent la variété de solutions techniques pouvant être mise en oeuvre dans le cadre de l'invention. Détection de la connexion électrique d'un appareil portable, détection de la présence d'une charge dans le circuit de transfert d'énergie, détection de la pose d'un appareil portable sur un support, détection de proximité de l'utilisateur par des moyens infrarouges passifs ou actifs, par changement de fréquence d'un oscillateur libre. Il peut s'agir également du contact d'une partie du corps de l'utilisateur exploitant sa conductibilité dans le cadre d'une mise à terre ou du passage au dessus d'un seuil de la réception d'un signal en rapport avec la fréquence du secteur lorsque l'utilisateur touche une partie conductrice en relation avec le dispositif, cette partie conductrice pouvant être une zone métallique ou métallisée solidaire du dispositif, de l'au moins un adaptateur ou encore de l'appareil à recharger. Les détections de plusieurs effets peuvent avantageusement être combinées, en particulier dans le cas de l'utilisation d'effets indirects ou de ceux qui sont connus pour être susceptibles d'être peu fiables pour réduire la probabilité d'une détection erronée.

Il est prévu que l'au moins un adaptateur du système selon l'invention comprend au moins un premier sous-ensemble connecté au dispositif, ledit premier sous-ensemble étant apte à transférer de l'énergie électrique à un appareil portable par des moyens filaires comprenant au moins deux contacts et/ou par des moyens non-filaires comprenant au moins un inducteur primaire, le transfert d'énergie se faisant directement ou par l'intermédiaire d'un second sous-ensemble connecté à l'au moins un appareil portable, le second sous-ensemble comprenant au moins deux contacts et/ou au moins un inducteur secondaire.
Il est prévu que l'au moins un adaptateur selon l'invention puisse prendre plusieurs formes telles qu'un câble terminé par au moins un connecteur ou au moins un inducteur permettant la recharge directe d'au moins un appareil portable. Il est aussi prévu que l'au moins un adaptateur soit subdivisé en deux sous-ensembles créant une nouvelle interface entre eux. Il est en outre prévu que plusieurs formes différentes d'adaptateurs soient mises en oeuvre dans un même système selon l'invention. Dans le langage de l'invention, le premier sous-ensemble de l'au moins un adaptateur est celui qui a une interface avec ledit dispositif et le second sous-ensemble est celui qui a une interface avec l'appareil portable. L'invention prévoit que selon ses variantes de mise en oeuvre, toutes les combinaisons de premiers et de seconds sous-ensembles soient possibles. Ceci depuis un seul premier sous-ensemble associable potentiellement à une infinité de seconds sous-ensembles pour répondre aux besoins d'adaptation des appareils présents et futurs jusqu'à plusieurs premiers sous-ensembles associables potentiellement à un seul modèle de second sous-ensemble ainsi que toutes combinaisons intermédiaires de premiers et de seconds sous-ensembles. Il est prévu que les moyens non filaires ne comprennent qu'un inducteur primaire c'est à dire émetteur d'énergie dans le cas de la recharge de l'au moins un appareil portable comprenant d'origine inducteur secondaire c'est-à-dire récepteur d'énergie. Dans ce cas l'inducteur unique est réputé appartenir audit premier sous-ensemble au sens de l'invention. Pour lever toute ambiguïté, l'invention comprend bien également le cas d'un appareil portable comprenant d'origine l'au moins deux contacts pour recevoir directement de l'énergie du premier sous-ensemble au sens de l'invention, ceci sans nécessiter la présence d'un second sous-ensemble.

Il est prévu que lesdits premier et second sous-ensembles de l'au moins un adaptateur du système selon l'invention sont agencés pour matérialiser une interface entre eux qui est apte à transférer de l'énergie électrique et qui est au moins en partie indépendante des caractéristiques spécifiques de l'au moins un appareil portable.
Il est prévu dans le cadre d'une mise en oeuvre particulièrement préférée de l'invention que la nouvelle interface résultant de la subdivision de l'au moins un adaptateur soit standardisée pour être commune à une pluralité d'appareils portables. En effet, la grande diversité de types de connecteurs utilisés pour la recharge des appareils portables, l'existence de plusieurs tensions possibles, la diversité de la localisation des connecteurs, la diversité des caractéristiques dimensionnelles des appareils rend avantageuse la création d'une nouvelle interface standardisée pour raccorder une pluralité d'appareils portables hétérogènes à un dispositif universel selon l'invention. Il est par ailleurs prévu que la nouvelle interface est au moins en partie voir dans certains cas complètement indépendante des caractéristiques spécifiques de l'au moins un appareil portable.

L'invention prévoit aussi que les contacts et/ou les inducteurs devant coopérer sont respectivement maintenus dans une position de contact et/ou de couplage apte au transfert d'énergie électrique par l'effet d'une force.

Il est prévu que l'invention soit mise en oeuvre à partir de contacts inclus dans des connecteurs standards ou spécifiques de l'au moins un appareil portable. Il est aussi prévu d'utiliser en tant que second inducteur recevant l'énergie électrique, un inducteur compris d'origine dans un appareil portable le cas échéant.
Il est aussi prévu dans une variante préférée de l'invention que l'interface entre lesdits premier et second sous-ensembles consiste en au moins deux paires de contacts électriques établissant la continuité d'au moins deux liaisons électriques dans la position de recharge de l'appareil portable.
Dans une variante encore plus préférée, le transfert d'énergie est réalisé par couplage inductif. Il convient que l'au moins une paire d'inducteurs que complète le cas échéant des armatures formant un circuit magnétique pour améliorer l'efficacité du couplage, soit maintenue dans une position permettant un couplage suffisant pour assurer le transfert d'énergie pendant la recharge de l'appareil portable.
Il est en outre prévu que les contacts et/ou les inducteurs devant coopérer sont respectivement maintenus dans une position de contact et/ou de couplage apte au transfert d'énergie électrique par l'effet d'une force s'exerçant sur l'appareil portable et/ou sur le second sous-ensemble de l'adaptateur le cas échéant.
On entend par l'effet d'une force, par exemple, l'effet de la force de gravité sur les masses de l'appareil portable et du second sous-ensemble et/ou par l'effet d'au moins une force exercée par au moins un ressort ou un matériau formant ressort et/ou par l'effet le la force d'attraction magnétique entre au moins un aimant ou un électro-aimant compris dans un sous-ensemble et une partie ferromagnétique ou un autre aimant présentant une polarité opposée compris dans l'autre sous-ensemble.

Il est prévu dans l'invention que concernant ledit adaptateur, le maintien dudit second sous-ensemble ou de l'appareil portable exercé par une force est contrôlé par une commande électrique en relation avec l'état de la charge de l'appareil portable.
Il s'agit d'un raffinement de l'invention pour déconnecter automatiquement et/ou pour placer automatiquement l'appareil portable dans une position permettant une préhension plus aisée en fin de charge. Par exemple si l'appareil est maintenu par l'effet d'une force magnétique produite par au moins un aimant permanent. Il peut s'agir aussi du maintien de l'appareil portable en position de charge par la circulation du courant de charge dans une bobine, l'appareil pouvant sortir de cette position, par exemple, par l'effet d'une force exercée par un ressort lorsque le courant de charge passe sous le seuil de maintien.

L'invention prévoit que concernant ledit adaptateur, ledit second sous-ensemble est associé à des moyens réalisant un sur-habillage au moins partiel de l'appareil portable.
L'invention prévoit dans une variante de mise en oeuvre particulièrement préférée que des moyens de sur-habillage tels que ceux qui sont couramment proposés pour protéger les appareils électroniques portables comprennent en outre des moyens techniques pour matérialiser un second sous-ensemble de l'au moins un adaptateur selon l'invention. Il est ainsi possible de standardiser par des moyens faisant corps avec l'appareil portable lui-même, tout ou partie de ses caractéristiques spécifiques, notamment mais pas seulement celles qui sont en relation avec sa recharge.

L'invention prévoit aussi que concernant ledit adaptateur, le connecteur assurant la connexion des circuits électriques dudit second sous-ensemble avec l'appareil portable a une partie saillante réduite relativement au connecteur standard correspondant lorsque le connecteur est inséré dans l'embase correspondante de l'appareil portable.
Il est en outre prévu dans l'invention que le connecteur devant alimenter l'appareil portable, au moins pour sa recharge, ait une partie saillante de taille réduite voir nulle lorsque le connecteur est inséré dans l'embase correspondant de l'appareil portable. Cette disposition est particulièrement avantageuse pour affiner au maximum le sur-habillage lorsque l'embase du connecteur concerné par la recharge, n'est pas situé du côté où il est prévu une surépaisseur pour, par exemple, y loger les composants additionnels nécessaires. Des moyens comme une fente ou un perçage dans la partie accessible du connecteur sont suffisants pour pouvoir extraire le connecteur le cas échéant au moyen d'un outillage basique tel qu'un petit tournevis ou un trombone déplié. Il est également prévu d'extraire le connecteur de son embase en exerçant une traction sur les moyens de raccordement électriques qui en sont solidaires même si cette opération est destructive.

Il est prévu dans l'invention que ledit second sous-ensemble dudit adaptateur comprend en outre des moyens pour restituer au moins une ressource d'origine de l'appareil portable.
On entend par la restitution d'au moins une ressource d'origine de l'appareil portable par l'intermédiaire des moyens réalisant un sur-habillage au moins partiel de l'appareil portable, par exemple la restitution de la fonction d'au moins un voyant et/ou d'au moins un bouton et/ou d'au moins un trou et/ou d'au moins un connecteur d'origine et/ou des caractéristiques géométriques identiques à celles d'au moins une partie de l'appareil portable.

Il est aussi prévu dans l'invention que ledit second sous-ensemble dudit adaptateur comprend au moins une ressource supplémentaire par rapport à celles de l'appareil portable considéré et/ou au moins une ressource standard équivalente sur le plan fonctionnel à au moins une ressource spécifique de l'appareil portable considéré.
Il s'agit d'offrir par l'intermédiaire des moyens réalisant un sur-habillage au moins partiel de l'appareil portable, au moins un voyant et/ou d'au moins un bouton et/ou d'au moins un trou et/ou d'au moins un connecteur n'existant pas ou existant différemment dans l'appareil portable considéré. Il peut s'agir d'au moins un connecteur non fourni dans le cadre de l'appareil portable considéré et/ou au moins une version standard d'un connecteur existant sous une forme spécifique dans l'appareil portable considéré. Par exemple, de nombreux modèles de téléphones portables proposent un connecteur unique multifonction spécifique quand à son format et son câblage pour connecter des accessoires externes de fait spécifiques par le besoin du connecteur complémentaire. Il peut s'agir d'écouteurs, d'un cordon de liaison au port USB d'un microordinateur, d'un chargeur spécifique etc. Les moyens selon l'invention réalisent un sur-habillage au moins partiel de l'appareil portable et permettent d'offrir en outre des connecteurs supplémentaires et/ou des connecteurs standards qui sont avantageux pour l'utilisateur en ce qu'il peut ainsi connecter des accessoires standards plus facilement disponibles et pouvant être choisis dans une offre plus vaste comprenant généralement des versions moins couteuses et/ou des versions plus qualitatives que les accessoires d'origine. L'utilisation d'accessoires standards offre en outre l'avantage supplémentaire de pouvoir être partagés avec d'autres appareils portables. Lesdites ressources supplémentaires peuvent être aussi par exemple un voyant de charge tel qu'une led, pour signaler sans ambiguïté et instantanément l'effectivité de la charge et pour valider indirectement le bon positionnement du second sous-ensemble et le bon fonctionnement du dispositif et du premier sous-ensemble.

Il est aussi prévu dans l'invention que ledit second sous-ensemble de l'au moins un adaptateur comprend au moins un moyen pour assurer pleinement, ou pour augmenter, l'autonomie de l'appareil portable et réduire ainsi la fréquence des besoins de recharge en relation avec ledit premier sous-ensemble de l'adaptateur. Il est en effet avantageux d'inclure dans ledit second sous-ensemble une batterie supplémentaire et/ou au moins un type de générateur apte à recharger au moins en partie l'appareil portable lorsqu'il ne reçoit pas d'énergie du dispositif selon l'invention. S'agissant de recharger des appareils portables utilisables en mobilité, des cellules photovoltaïques recouvrant une surface significative de l'appareil par l'intermédiaire dudit second sous-ensemble et/ou un ou plusieurs générateurs électrocinétiques compris dans le second sous-ensemble sont particulièrement appropriés. Des cellules photovoltaïque peuvent par exemple recouvrir la face arrière du second sous-ensemble recouvrant le dos de l'appareil portable. De manière encore plus avantageuse, des cellules photovoltaïque peuvent en outre recouvrir la face externe d'un volet faisant partie dudit second sous-ensemble et formant protection de l'écran de l'appareil portable lorsqu'il est fermé de sorte que le volet ouvert et l'ensemble retourné écran posé sur un support, une surface de cellules de l'ordre du double de la surface de la face avant ou arrière de l'appareil portable est exposée au rayonnement lumineux permettant la collecte de davantage d'énergie.
Le second sous-ensemble de l'adaptateur comprend en outre le cas échéant l'électronique d'adaptation des tensions issues du ou des générateurs embarqués aux caractéristiques de la tension de charge de l'appareil portable, ainsi que pour permettre le transfert d'énergie par ledit premier sous-ensemble de l'adaptateur selon l'invention. Il est à noter que la recharge de l'appareil portable par des moyens embarqués dans le second sous-ensemble n'est qu'un raffinement venant en complément de la recharge utilisant pleinement les caractéristiques du système selon l'invention, cette dernière étant plus rapide et plus complète.

Il est prévu en outre dans l'invention que ledit second sous-ensemble dudit adaptateur comprend au moins un moyen d'identification sans contact.
Ledit second sous-ensemble est étroitement associé, de manière pouvant être considérée comme permanente, à l'appareil portable qu'il sur-habille au moins partiellement, ce dernier étant en outre associé à son utilisateur en particulier s'il s'agit d'un téléphone portable. L'invention prévoit d'utiliser ces associations durables en intégrant dans ledit second sous-ensemble de l'adaptateur au moins un moyen d'identification sans contact.
Il s'agit par exemple d'au moins un transpondeur fonctionnant en lecture seule ou en lecture et en écriture fonctionnant par couplage inductif, capacitif ou radiofréquence dites RFID pour permettre l'identification du terminal portable et/ou de son utilisateur au moyen de dispositifs de lecture et de traitement des données pouvant être externes à l'invention. L'au moins un moyen d'identification sans contact peut être amovible et placé dans un logement accessible dudit second sous-ensemble, par exemple compris dans un évidement fermé par une paroi de l'appareil portable lorsque ce dernier est sur-habillé. Dans une variante préférée notamment pour des applications de sécurité externes à l'invention, l'au moins un moyen d'identification sans contact est au moins en partie surmoulé dans une paroi dudit second sous-ensemble de l'adaptateur. Il est prévu que l'au moins un moyen d'identification sans contact soit utilisé pour reconnaitre le destinataire d'un message vocal selon l'invention tel que décrit précédemment. Il est à noter que les moyens d'identification sans contact permettent en outre d'améliorer significativement la confidentialité dans la gestion des messages vocaux qui ainsi ne peuvent être écoutés que par le porteur identifié du moyen.
Il est aussi prévu que l'au moins un moyen d'identification soit utilisé en association avec un paramétrage d'au moins une caractéristique technique par exemple en relation avec la recharge et qui nécessite la reconnaissance d'un appareil portable donnée par le dispositif. Il est prévu de surcroît que l'au moins un moyen d'identification sans contact compris dans le second sous-ensemble selon l'invention soit utilisé dans le cadre d'applications externes comme dans les exemples non-limitatifs suivants : pour ouvrir la serrure à commande électronique d'une porte d'un bâtiment ou d'une automobile, pour le paiement de l'accès à des transports en commun, pour le pointage horaire etc. La pluralité de moyens d'identification sans contact distincts dans un même second sous-ensemble selon l'invention est souvent nécessaire en pratique pour des raisons de sécurité, de confidentialité ou de standards techniques différents imposés par les opérateurs des services. Il est particulièrement avantageux pour l'ensemble des parties prenantes de traiter les problèmes d'identification sans contact dans le cadre d'un second sous-ensemble selon l'invention plutôt que directement dans l'appareil portable qui lui est associé.

Pour lever toute ambiguïté, l'invention comprend bien le cas d'un second sous-ensemble conçu sous la forme d'une pièce apte à remplacer une pièce originale de l'appareil portable, par exemple de la partie dorsale du boîtier de l'appareil portable ou encore d'une trappe à batterie le cas échéant. L'invention comprend bien également le cas où le second sous-ensemble est réalisé sous la forme d'un adaptateur à brancher dans une prise de l'appareil portable.

L'invention prévoit que l'adaptateur pour connecter ledit dispositif à l'au moins un appareil portable comprend au moins un câble et au moins un connecteur réalisé par surmoulage, l'au moins un connecteur étant apte à la recharge d'au moins un modèle d'appareil portable.
Dans les variantes de mise en oeuvre de l'invention dont il s'agit, l'adaptateur peut être l'adaptateur secteur d'origine prévu pour la recharge d'un modèle d'appareil portable donné, le dispositif selon l'invention assurant la gestion de l'alimentation de l'au moins un adaptateur secteur concerné. Dans d'autres variantes pouvant être mises en oeuvre seules ou en combinaison avec la précédente, l'au moins un appareil portable est alimenté pour sa recharge directement à partir du dispositif selon l'invention qui comprend alors au moins une alimentation très basse tension appropriée. Il est prévu en outre que la partie préhensile de l'au moins un connecteur est réalisée par surmoulage de matière plastique autour de l'arrivée du câble et de la partie technique du connecteur proprement dit dont les contacts appropriés ont été préalablement raccordés aux fils correspondants du câble. Il est aussi prévu que le standard du connecteur retenu pour équiper l'extrémité du câble non connectée au dispositif soit apte à la recharge au moins un modèle d'appareil portable. L'aptitude du connecteur retenu à recharger au moins un modèle d'appareil portable s'entend par connexion directe ou par l'intermédiaire d'un second sous-ensemble selon l'invention formant un sur-habillage au moins partiel de l'appareil portable. Les deux standards de connecteur préférés dans le cadre de l'invention sont le standard dit universel ou encore « micro-USB » ou le standard « mini-USB ». Ces deux standards de connecteurs offrant en outre l'avantage d'une normalisation de la tension d'alimentation associée (5V continu). Bien entendu l'utilisation de tout autre standard présent ou futur apte à la recharge d'au moins un modèle d'appareil portable reste dans le cadre de l'invention.

L'invention prévoit aussi que l'adaptateur comprend en outre un changeur de type de connecteur, amovible et réalisé par surmoulage, pour permettre la connexion d'un appareil portable dont le connecteur pour la recharge n'est pas compatible avec l'au moins un connecteur de l'adaptateur.
Il s'agit de pouvoir recharger avec le système selon l'invention des appareils portables qui ne sont pas équipés d'un connecteur compatible avec celui retenu pour l'extrémité du câble de l'adaptateur selon l'invention. Le changeur de type de connecteur selon l'invention comprend une embase compatible avec le connecteur retenu pour l'extrémité du câble de l'adaptateur et un connecteur compatible avec un autre standard.

L'invention prévoit dans le cadre de l'adaptateur qu'au moins un des éléments réalisés par surmoulage comprend en outre une ou plusieurs diodes montées en série, dans au moins un des circuits d'alimentation, pour abaisser la tension fournie par le dispositif à une valeur déterminée qui convient pour la recharge du modèle d'appareil portable considéré.
Il s'agit de pouvoir recharger avec le système selon l'invention des appareils portables dont la tension de l'alimentation pour la recharge est plus basse que celle fournie par le connecteur retenu pour l'extrémité du câble de l'adaptateur selon l'invention. Il est prévu d'utiliser la chute de tension aux bornes d'une diode qui est une caractéristique relativement indépendante du courant la traversant pour pouvoir réaliser un abaisseur de tension peu couteux, peu encombrant et qui est de plus aisément intégrable dans un élément réalisé par surmoulage sans nécessiter de circuit imprimé. En sélectionnant des diodes dans les catégories appropriées il est prévu de pouvoir déterminer la tension de sortie de l'abaisseur de manière relativement fine à partir d'une tension d'entrée connue. Par exemple en utilisant des diodes silicium classiques montées en série on abaisse la tension d'entrée de 0,6V par diode. L'inclusion dans le montage en série de diodes dites Schottky permet un réglage fin de la tension de sortie à raison d'un abaissement de 0,2V par diode. Dans la pratique, l'utilisation de diodes d'usage général au silicium 1A, par exemple de la série « 1N4000 » qui sont particulièrement économiques et robustes suffit pour obtenir une tension de sortie qui soit comprise dans la tolérance de l'appareil portable à alimenter. L'abaisseur de tension à diode selon l'invention peut être compris dans un convertisseur de type de connecteur surmoulé tel que décrit précédemment ou encore dans le surmoulage d'un connecteur équipant l'extrémité d'un câble de liaison entre le dispositif et un appareil portable.

### Description détaillée des figures et de modes de réalisation

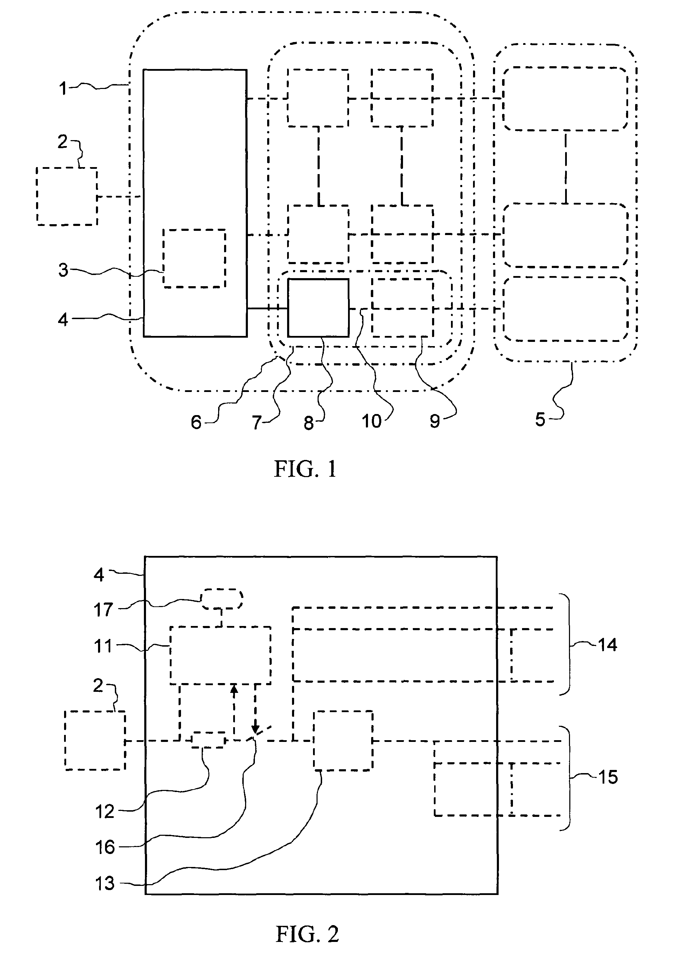

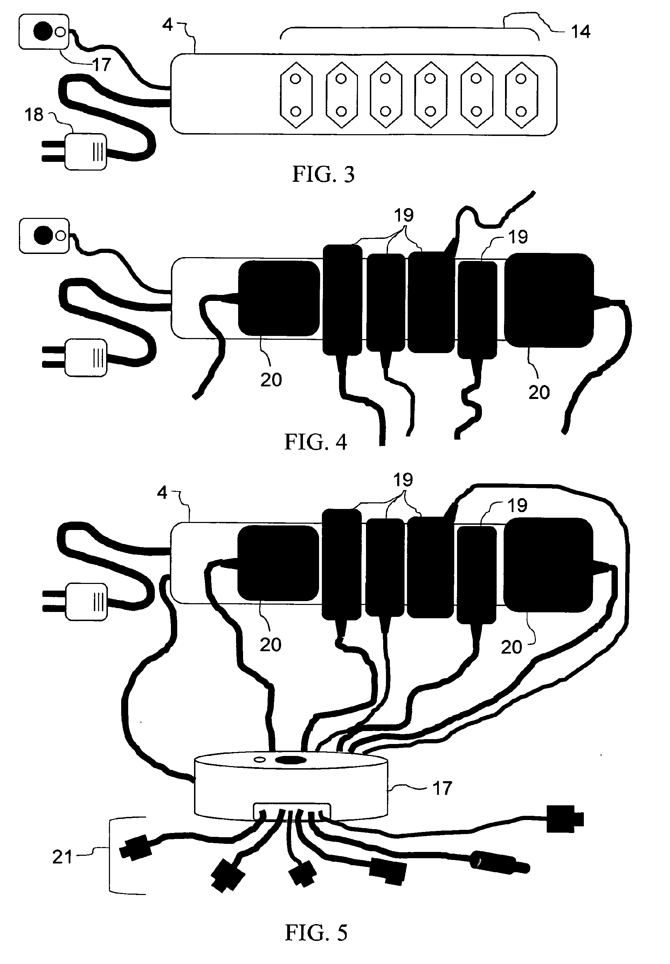

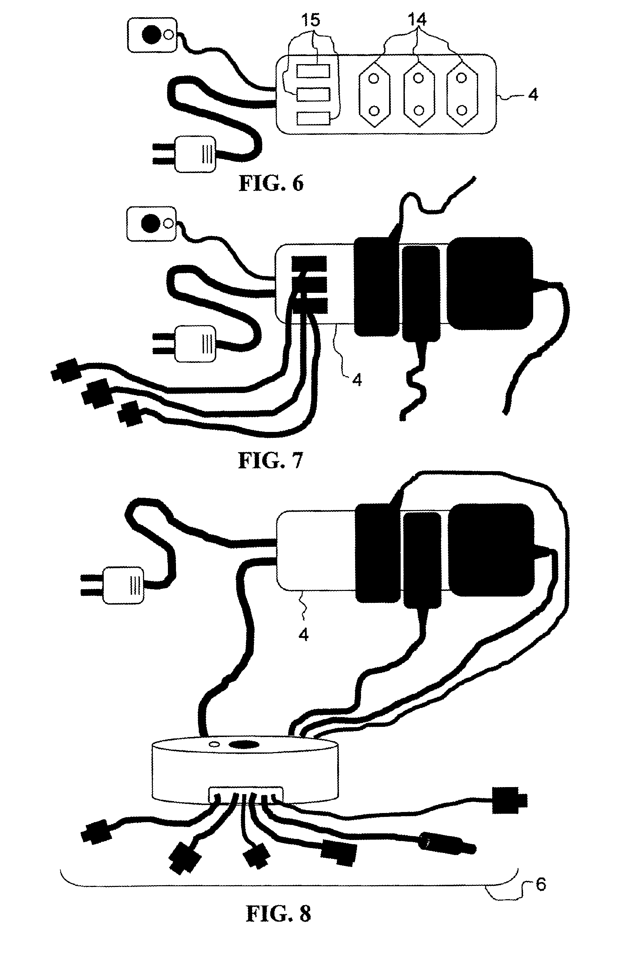

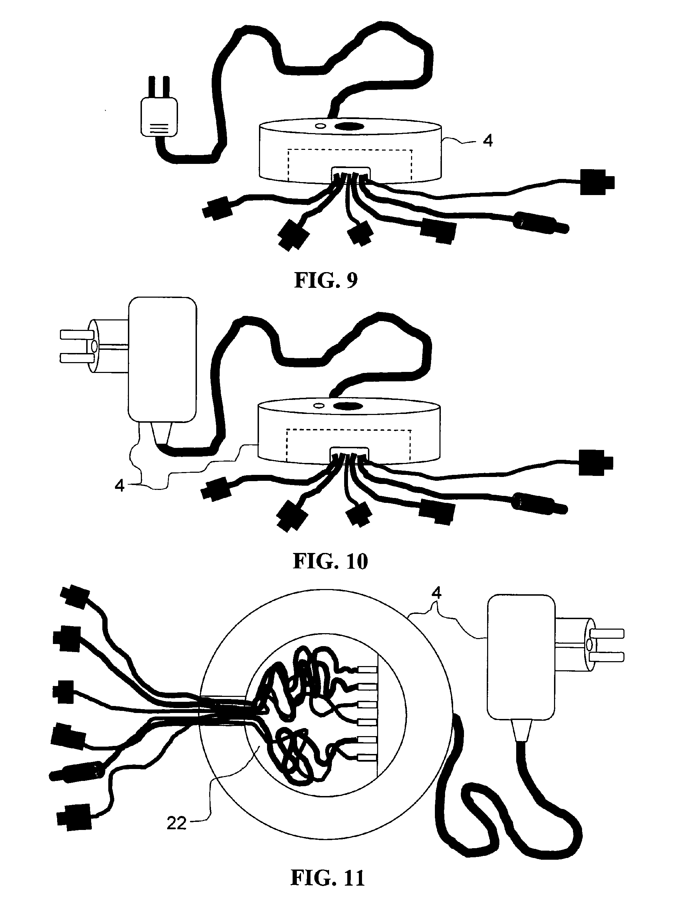

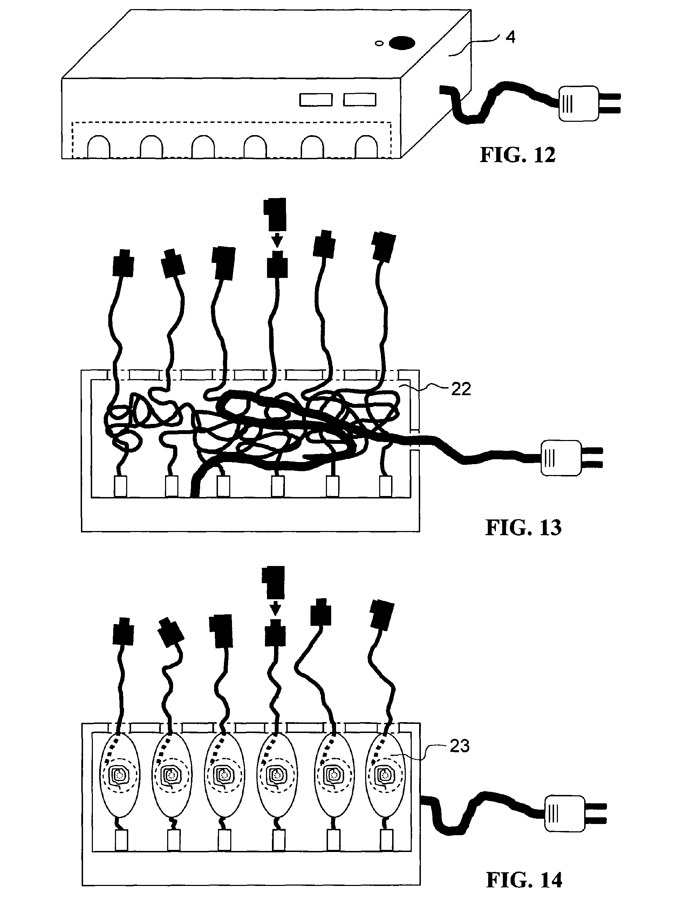

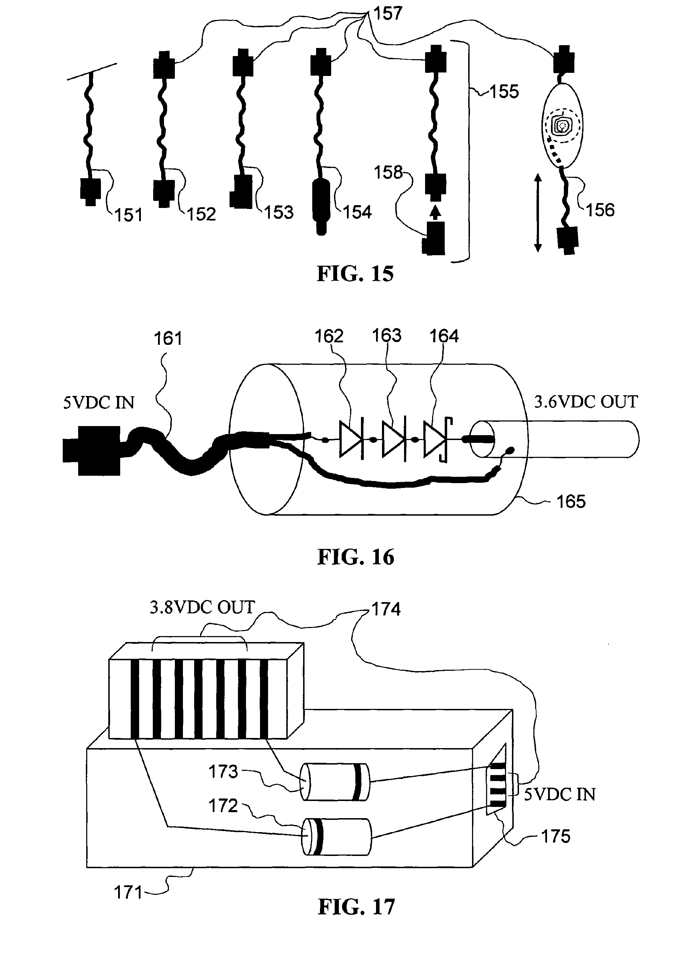

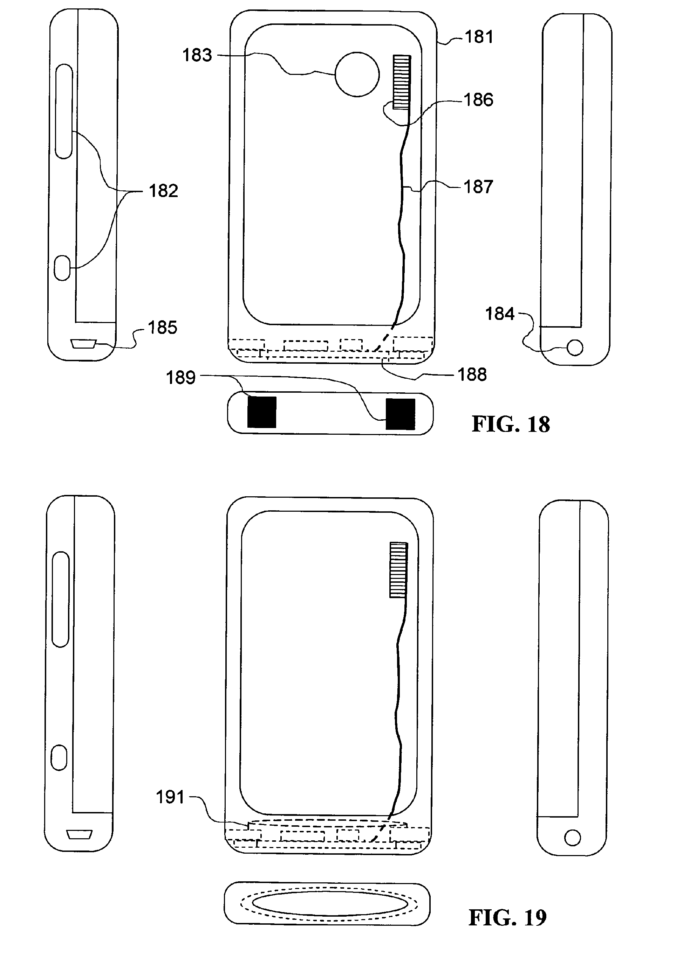

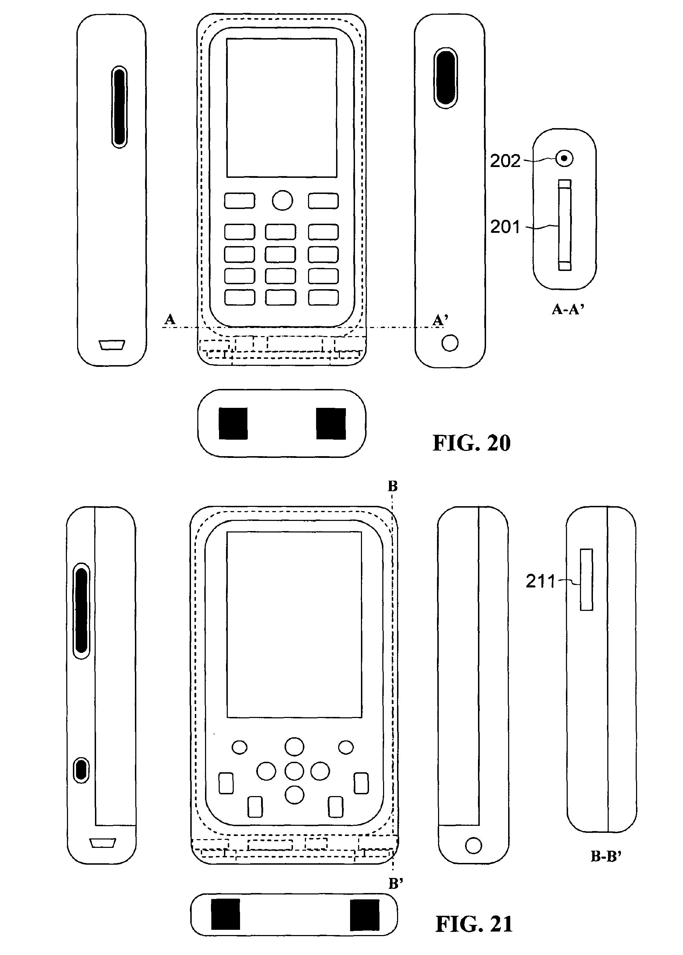

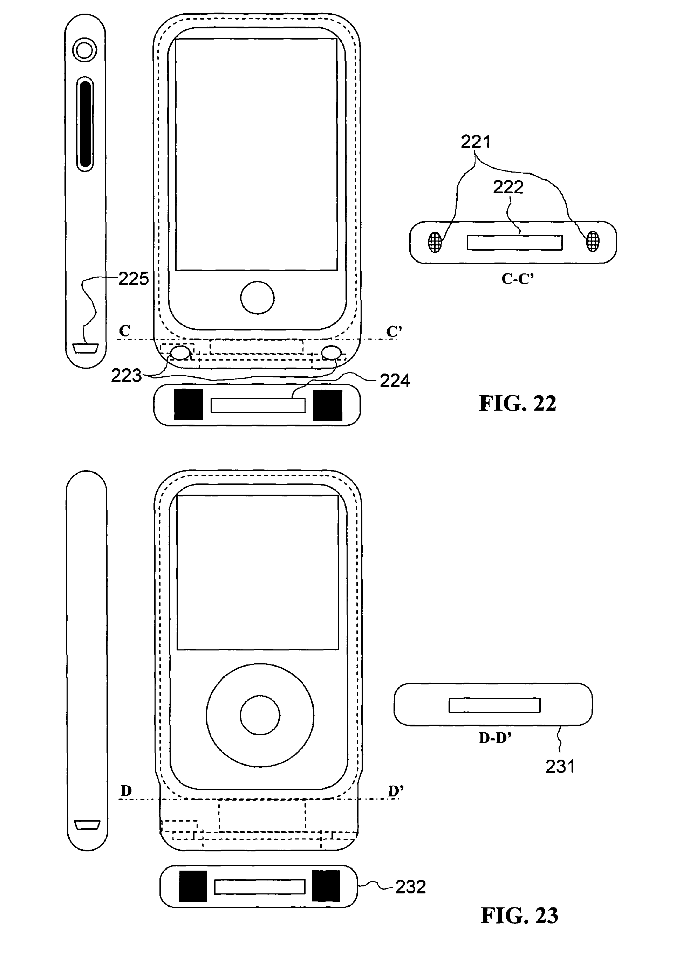

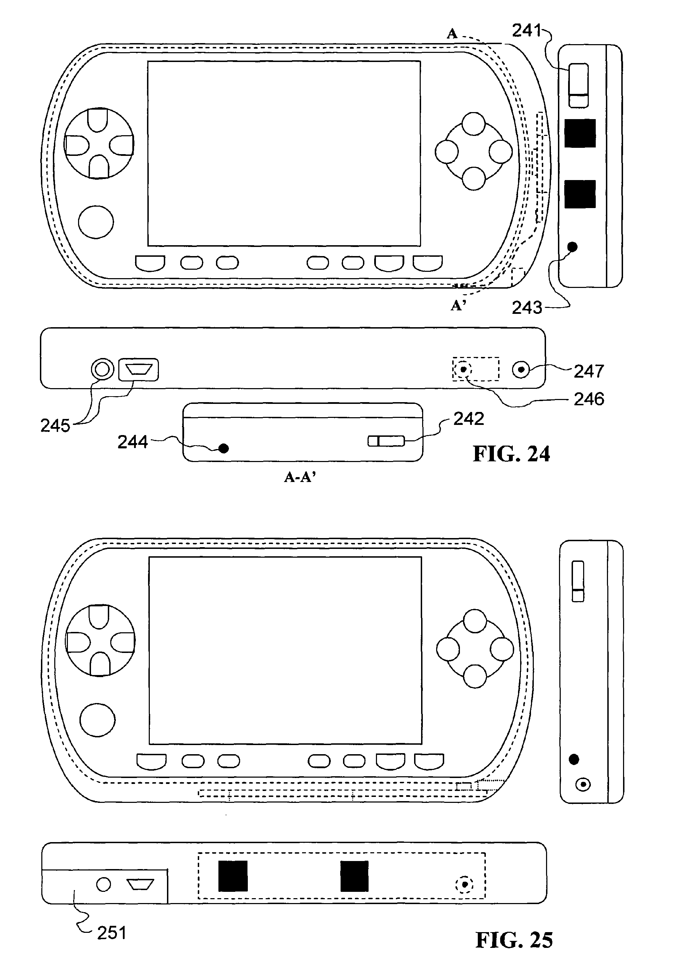

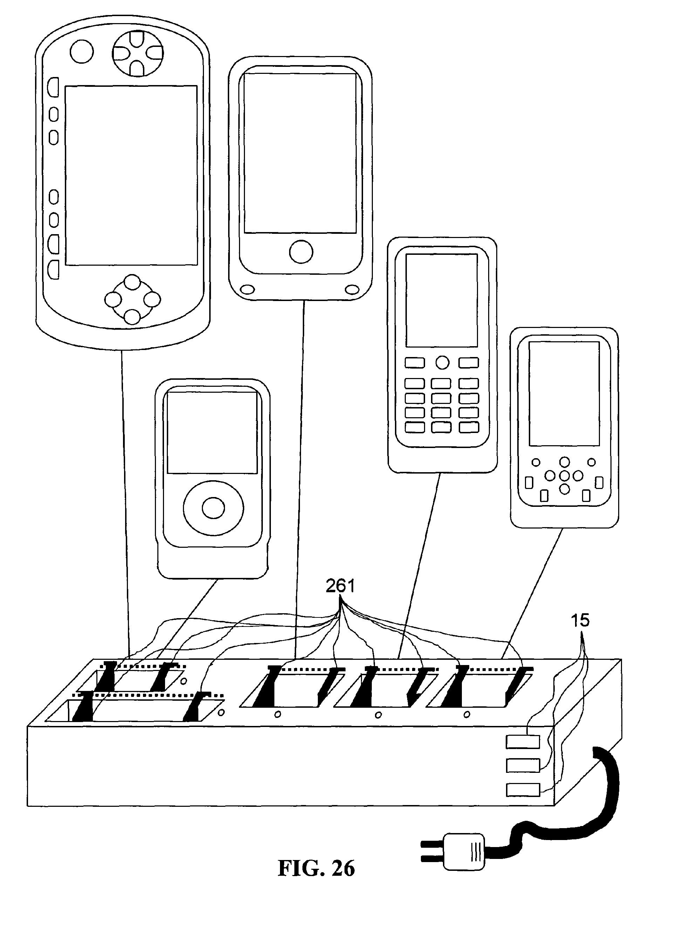

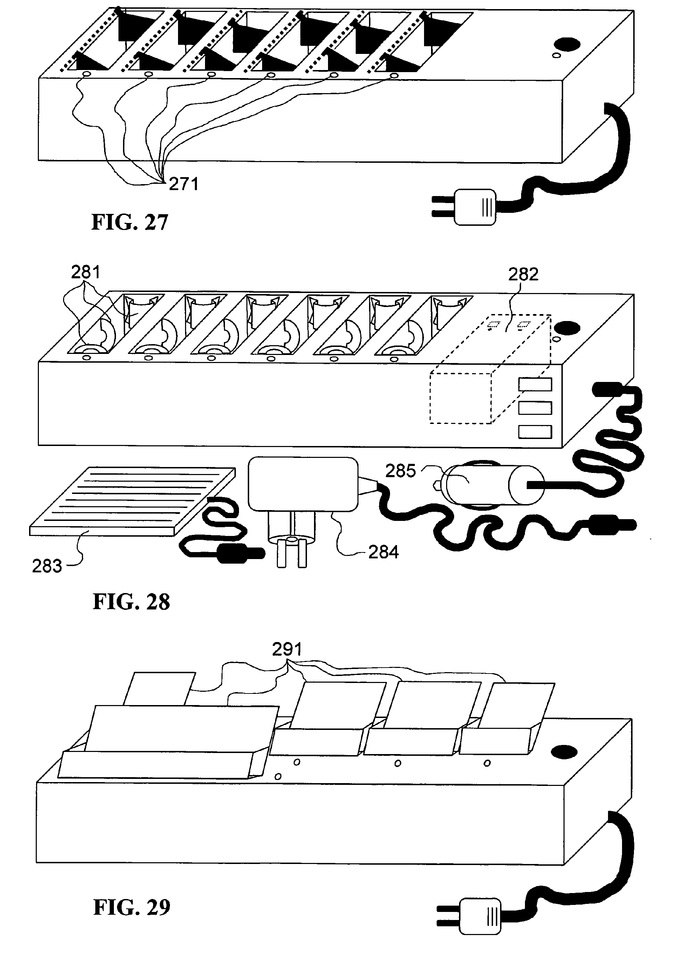

D'autres particularités et avantages de l'invention apparaîtront encore dans la description ci-après. Aux dessins annexés données à titre d'exemples non limitatifs :
**La** **figure 1** illustre l'architecture du système selon l'invention dans son environnement.
   Une source d'énergie électrique externe (2) ou une source interne (3) comprise dans le dispositif (4) fournit l'énergie nécessaire à la recharge de l'au moins un appareil portable (5) et des besoins internes du système selon l'invention (1). L'au moins un adaptateur (6) assure le transfert d'énergie du dispositif (4) vers l'au moins un appareil portable (5).
   Un adaptateur (7) comprend au moins un premier sous-ensemble (8) connecté au dispositif (4) pour transmettre l'énergie électrique directement à l'au moins un appareil portable (5) ou dans certaines variantes de mise en oeuvre par l'intermédiaire du second sous-ensemble (9). Dans les variantes de mise en oeuvre concernées, une nouvelle interface (10), qui est au moins en partie indépendante des caractéristiques spécifiques de l'au moins un appareil portable (5), est matérialisée entre lesdits premier et second sous-ensembles (8, 9).
**La** **figure 2** illustre la structure interne de la variante préférée du dispositif. Cette variante est préférée car elle est à la fois robuste, industrialisable à faible coût et est la plus universelle au regard des appareils pouvant être rechargés en ce qu'elle gère une alimentation interne pour la recharge d'appareils portables courants, mais aussi tout autre type de chargeur externe pour recharger des appareils portables pour lesquels les solutions pour appareils portables courants ne conviennent pas. La structure divulguée dans la figure 2 correspond aux illustrations des figures 6 à 8.
   Dans cet exemple de mise en oeuvre de l'invention qui n'est en rien limitatif, un circuit de commande (11) du dispositif (4) est alimenté par une source d'énergie électrique externe (2) qui dans cet exemple est le réseau électrique à basse tension alternative 230V/50Hz ou 110V/60Hz. Le circuit de commande (11) comprend des moyens pour assurer sa propre alimentation à partir de la source externe (2). Ces moyens sont prévus pour avoir une longue durée de vie en alimentation permanente, une grande robustesse et une consommation de puissance active inférieure à 0,5W en veille. Un circuit d'alimentation comprenant un condensateur comme élément abaisseur de tension série est particulièrement approprié pour offrir ces caractéristiques. Ledit circuit de commande comprend en outre des moyens (12) pour mesurer la puissance consommée par l'ensemble des charges (13, 14) qui lui sont connectées. Les charges dont il est question comprennent les chargeurs externes qui peuvent être connectées sur les prises secteur commandées (14) prévues à cet effet ainsi que l'alimentation interne au dispositif (13) qui est prévue pour alimenter directement des appareils portables en vue de leur recharge par des moyens (15). L'alimentation interne (13) est en outre prévue pour assurer l'isolation galvanique nécessaire à la sécurité électrique du système selon l'invention. Ladite alimentation interne (13) n'a cependant pas besoin d'avoir des caractéristiques exceptionnelles sur le plan de la longévité en fonctionnement et du rendement à vide car son alimentation est interrompue par un relais (16) compris dans le circuit de commande lorsque tous les appareils portables sont déconnectés ou que leur recharge est considérée comme terminée. Le circuit de commande (11) comprend en outre une interface avec l'utilisateur (17) pouvant être constituée seulement d'un bouton poussoir pour la mise en marche et un voyant de signalisation de l'état fonctionnel du dispositif. Le circuit de commande (11) comprend aussi la logique de gestion des ressources comprises dans le dispositif (4) ainsi que des moyens pour régler le seuil de puissance en dessous duquel les appareils portables sont considérés comme chargés ou pas en charge. Le seuil tient compte le cas échéant de la puissance résiduelle consommée par d'éventuels chargeurs externes qui restent connectés et sont vus comme des charges permanentes par les moyens de mesure du circuit de commande (11). Les moyens de mesure de la puissance consommée par les chargeurs (13, 14) peuvent avantageusement n'être que des moyens de mesure du courant. Compte tenu de la relativement faible puissance des charges que représentent les chargeurs, la mesure de la tension aux bornes d'une résistance de faible valeur, par exemple de 0,47 Ohm pouvant dissiper quelques watts, convient à la mise en oeuvre de l'invention bien que toute autre technique permettant de mesurer ou d'évaluer une grandeur représentative de la puissance consommée par les chargeurs entre dans le cadre de l'invention. Il est prévu en outre qu'une temporisation de charge additionnelle soit ajoutée entre l'instant de la détection du passage en dessous du seuil de puissance correspondant à des appareils portables considérés tous chargés ou pas en charge et l'instant de l'ouverture du contact du relais conduisant à la déconnection de l'alimentation interne (13) et des éventuels chargeurs externes (14) de la source d'alimentation externe (2). Cette temporisation permet notamment de compenser dans certains cas l'absence de possibilité de mesure de la puissance consommée par les appareils portables en fin de charge en ce qu'elle assure le maintien de l'alimentation des chargeurs jusqu'à une fin certaine de la recharge. L'ensemble des moyens mis en oeuvre pour la gestion du dispositif peuvent être compris dans un microcontrôleur standard à bas coût comme par exemple dans un «ATtiny25 » de chez « Atmel » (marques déposées) équipé du microprogramme approprié. Le circuit de commande peut aussi être réalisé à partir de moyens électroniques analogiques et/ou logiques câblés sans sortir du cadre de l'invention. Il est en outre avantageusement prévu des moyens optionnels permettant le réglage et/ou la configuration des paramètres de fonctionnement du système selon l'invention dont la durée de ladite temporisation de charge additionnelle. Il est à noter qu'une gestion plus fine de l'état des charges peut être obtenue en mesurant le courant non pas globalement pour l'ensemble des charges mais d'une manière plus individualisée jusqu'à une mesure de courant par charge. Un premier palier d'amélioration qui reste cependant dans un coût de mise en oeuvre raisonnable consiste à utiliser des premiers moyens pour mesurer le courant consommé par l'ensemble des charges fonctionnant à la tension du secteur et des seconds moyens pour mesurer le courant consommé par la source d'alimentation très basse tension interne à son primaire. La consommation de la source d'alimentation à son primaire étant en relation directe avec la consommation des charges alimentées en très basse tension connectées à son secondaire.
**La** **figure 3** illustre une première variante de l'invention.
   Il s'agit d'une mise en oeuvre de l'invention agencée pour piloter l'alimentation électrique d'au moins un chargeur individuel par appareil portable. Dans cette variante, le dispositif (4) selon l'invention prend la forme d'un bloc de prises électriques (14) destiné à recevoir au moins un chargeur individuel tels que ceux livrés habituellement avec les appareils ou communément disponibles sous forme d'accessoire. L'au moins un chargeur individuel représente l'au moins un adaptateur au sens de l'invention. Des moyens d'interaction avec l'utilisateur (17) déportés qui comprennent par exemple un bouton poussoir pour la mise en marche et un voyant permettent de minimiser la partie visible du système selon l'invention. Le dispositif comprend en outre au moins un moyen pour commuter l'alimentation des chargeurs individuels à partir d'un raccordement commun (18) au réseau électrique. Des moyens sont prévus pour mesurer ou pour évaluer la puissance consommée par lesdits chargeurs individuels, sur une base unitaire à raison d'une détection par prise offerte ou sur une base globale ou encore sur une base par groupe d'une pluralité de prise. La mesure ou l'évaluation de la puissance consommée par le chargeur externe pouvant n'être basée que sur une mesure de courant, par exemple au moyen d'une résistance ou du primaire d'un transformateur de courant en série avec le circuit d'alimentation du chargeur externe. Compte tenu de la relativement faible puissance desdits chargeurs externes dont il s'agit de mesurer le courant des cellules de mesures comprenant une résistance de valeur relativement élevée et deux diodes de puissance montées en antiparallèle peuvent offrir un signal de relativement forte amplitude apte à être mesuré au moyen d'un convertisseur analogique numérique compris dans un microcontrôleur standard. La valeur de la résistance de mesure étant calculée pour que la plage d'intérêt soit comprise dans la zone linéaire d'excursion de la tension avant l'écrêtage effectué par les diodes. Le regroupement de plusieurs prises pour chargeurs individuels derrière une cellule de mesure commune en vue d'un abaissement des coûts de mise en oeuvre est possible sans sortir du cadre de l'invention. La limite étant la capacité à discriminer la consommation d'un chargeur actif par rapport à la somme des consommations résiduelles d'une pluralité de chargeurs sans charge connectées ou dont l'appareil est connecté mais ayant terminé sa recharge. Dans le cas de l'utilisation d'un transformateur de courant, le regroupement des moyens de mesure peut se faire en agençant une pluralité de prises connectées en parallèle derrière un enroulement primaire unique du transformateur de courant. Avantageusement l'espacement des prises destinées à recevoir des chargeurs individuels peut être non uniforme et/ou orienté dans l'espace pour permettre le branchement d'un ou de plusieurs chargeurs d'un encombrement important sans pour autant augmenter de manière importante la taille du dispositif.
   A partir de la mesure ou de l'évaluation, de la puissance ou du courant consommé par les chargeurs externes, et d'une comparaison avec au moins une valeur préalablement déterminée, le dispositif selon l'invention coupera l'alimentation électrique de tous les chargeurs lorsque plus aucun appareil ne sera en charge. La fixation de l'au moins une valeur préalablement déterminée peut se faire en usine, par un apprentissage préalable et une mémorisation de la consommation correspondant à la fin de charge. La détection de fin de charge peut également se faire au moyen d'un algorithme exploitant la valeur de la mesure et de la dynamique de son évolution. Dans une variante particulièrement économique, l'invention prévoit de ne seulement gérer que les temps de mise en marche des chargeurs sans prise en compte de la puissance ou du courant consommé par ces derniers. Il est prévu qu'une temporisation d'une durée supérieure à la plus longue des durées de recharge normale, qui est relancée à chaque nouvelle mise en charge d'un appareil portable, coupe l'alimentation des chargeurs à son arrivée à échéance. Avantageusement, au-delà des réglages par défaut réalisés en usine qui conviennent à la plupart des cas d'utilisation, des moyens de réglage et/ou de configuration sont mis en oeuvre dans le dispositif pour pouvoir néanmoins utiliser le système dans des cas particuliers.
**La** **figure 4** illustre la première variante avec des adaptateurs connectés.
   Il est à noter que la répartition des prises proposée dans cet exemple est optimisée pour les chargeurs à découpage de petite puissance (19) mais elle permet néanmoins le branchement de chargeurs encombrants (20) aux deux extrémités sans sacrifier la compacité du dispositif.
**La** **figure 5** illustre la première variante dans un autre style.
   Dans cet exemple, la commande déportée de la mise en marche du système selon l'invention de la variante précédente fait également fonction de maintien à disposition des connecteurs prêts à être saisis pour les connecter sur les appareils portables correspondants. Cet exemple de mise en oeuvre prévoit la séparation entre d'une part la partie inesthétique du système comprenant le dispositif (4) et le corps des chargeurs externes (19, 20) et d'autre part les moyens d'interaction avec l'utilisateur (17) et les extrémités des câbles issus des chargeurs individuels (21) qui doivent rester facilement accessibles. Ainsi le dispositif et les alimentations peuvent rester cachés, pas exemple au sol derrière un meuble et la commande déportée peut être avantageusement installée sur le dessus d'un meuble à l'endroit où seront posés les appareils portables à recharger.
**La** **figure 6** illustre la variante préférée de l'invention.
   Cette variante se différence de celles des figures 3, 4 et 5 par le fait que le dispositif (4) selon l'invention comprend en outre une alimentation très basse tension continue, par exemple délivrant une tension 5V et capable de fournir un courant d'au moins 2A par exemple par l'intermédiaire de prises (15) au standard USB pour recharger directement des appareils portables en plus de moyens pour piloter l'alimentation basse tension alternative des chargeurs externes par exemple en 230V/50Hz ou en 110V/60Hz par l'intermédiaire d'une pluralité de prise (14).
**La** **figure 7** illustre la variante préférée avec les adaptateurs connectés.
**La** **figure 8** illustre la variante préférée dans le style préféré.
   Il est à noter dans l'exemple de la figure 8 que l'au moins un adaptateur (6), est constitué de trois chargeurs individuels et de trois câbles connectés à ladite source d'alimentation unique du dispositif (4).
**La** **figure 9** illustre une troisième variante de l'invention sous une forme monobloc dont la particularité par rapport aux variantes précédentes est de ne comprendre qu'au moins une alimentation très basse tension continue, par exemple fournissant une tension de 5V et un courant maximum de 4,2A, pour recharger l'au moins un appareil portable. Il n'est pas proposé dans cet exemple de sorties commandées à la tension du secteur pour alimenter des chargeurs externes. Néanmoins, la même structure interne comprenant un circuit de commande alimenté par une première alimentation et des moyens de commutation de la source d'alimentation pour la recharge des appareils peut être conservée. Cela étant on ne sort pas du cadre de l'invention si dans cet exemple le circuit de commande est alimenté par ladite source d'alimentation à très basse tension et/ou si la mesure du courant est réalisée de manière globale ou par sortie au secondaire de ladite source d'alimentation. Un simple bouton de mise en marche et un voyant pour signaler des états de fonctionnement du dispositif sont proposés dans cet exemple mais l'interface avec l'utilisateur peut utiliser davantage de ressources ou des moyens plus sophistiqués sans sortir du cadre de l'invention.
**La** **figure 10** illustre la troisième variante de l'invention dans une version où les moyens mis en oeuvre dans le dispositif selon l'invention sont répartis en deux sous-ensembles permettant de diminuer sensiblement l'encombrement de la partie visible du système.
**La** **figure 11** illustre la troisième variante de l'invention vue de dessous.
   On y découvre un logement pour accéder aux prises destinées aux câbles des adaptateurs et pour contenir les longueurs excédentaires de ces câbles. Il est prévu une pièce formant couvercle pour bloquer les câbles à leur sortie et pour éviter que les longueurs excédentaires sortent du logement par l'effet de la gravité lorsqu'on soulève le dispositif.
**La** **figure 12, 13, 14** illustre une quatrième variante de l'invention. Il s'agit d'une variante proche de la variante précédente. La figure 13 montre par la vue dessous le logement permettant de dissimuler les longueurs de câble excédentaires tant pour les câble de liaison aux appareils portables que pour le câble d'alimentation. Comme dans le cas de la figure 11 une pièce de fermeture est prévue pour maintenir les parties de câbles excédentaires en place. La figure 14 illustre l'utilisation de câbles à enrouleur.
**La** **figure 15** illustre des variantes 151 à 156 de câbles pour connecter les appareils portables au dispositif selon l'invention. Il s'agit de variantes dudit premier sous-ensemble. La variante 151 est un câble connecté de manière permanente au dispositif et présente une fiche surmoulée du côté de l'appareil portable. Cette fiche est apte à la recharge d'au moins un appareil portable. En pratique le choix le plus avantageux est celui d'un standard de prise le plus universel dont la tension associée au format du connecteur le cas échéant est conforme à celle délivrée par le dispositif. Un connecteur au format mini-USB ou micro-USB associé à une tension de 5V, sans limitation de courant autre que la capacité maximale de la source d'alimentation du dispositif est le choix préféré. Les autres exemples de câbles 152 à 156 sont équipés d'un connecteur surmoulé aux deux extrémités. Le connecteur 157 prévu du côté du dispositif est conforme à un standard unique pour un dispositif donné, par exemple des connecteurs au standard mini-USB. Cette caractéristique permet la connexion de tout type de câble au dispositif et permet le cas échéant de réaliser la fonction de changement de standard pour les appareils portables nécessitant le support d'un standard différent pour la recharge. L'exemple 152 est un câble dont les deux connecteurs sont identiques. Au moins les exemples 153 et 154 sont des adaptateurs dont le connecteur du côté de l'appareil portable est différent du standard unique utilisé pour la connexion au dispositif. L'un et/ou l'autre des connecteurs de ces câbles réalisés par surmoulage peut comprendre le cas échéant des moyens tels que des diodes en série dans les circuits pour abaisser la tension fournie à l'appareil portable partant de la tension proche fournie par le dispositif. Le câble 155 illustre une autre manière de réaliser le changement de standard de connecteur et/ou de tension. Il s'agit d'utiliser un câble indifférencié, par exemple un câble avec ou sans connecteur du coté du dispositif mais qui est équipé à son extrémité prévue pour l'appareil portable d'un connecteur dans un format unique, si possible le même format de connecteur que pour le côté dispositif le cas échéant. Ceci pour rendre indifférent le côté du câble dans son installation, pour simplifier la fabrication et permettre des économies d'échelle. Le convertisseur de format de connecteur 158 réalisé par surmoulage peut comprendre des moyens pour abaisser la tension le cas échéant. Le connecteur du convertisseur de format prévu pour recevoir celui de l'extrémité du câble aura avantageusement des caractéristiques dimensionnelles et/ou de forme légèrement différentes du standard auquel il se réfère pour assurer un montage plus serré que la normale. L'objectif étant de réaliser un assemblage plus résistant à la traction entre le connecteur du câble et son correspondant du côté du convertisseur de format qu'entre l'autre connecteur du convertisseur de format et son correspondant de l'appareil portable pour que lorsqu'on tire sur le câble, ce soit le convertisseur qui se déconnecte de l'appareil portable et non pas le câble qui se déconnecte du convertisseur. Avantageusement, les fils non utilisés dans les câbles pour la recharge des appareils portables et qui normalement seraient utilisées pour assurer la continuité de contacts non utilisés tels que les contacts D- et D+ d'un connecteur USB peuvent ne pas être montés. Dans le cas de l'utilisation de ces contacts pour signaler à l'équipement portable qu'il est connecté à une alimentation capable d'aller au-delà de la limite en intensité associée à un standard de connexion tel qu'USB, alors l'utilisation appropriée de ces circuit peut être réalisée en local directement dans l'au moins un connecteur surmoulé du côté de l'appareil portable et avantageusement dans les deux connecteurs identiques pour permettre un montage indifférencié des extrémités du câble. Ainsi un câble économique à deux fils non-blindés peut être utilisé à la place d'un câble à quatre fils éventuellement blindés plus coûteux. La dite circuiterie appropriée pour la signalisation d'un mode de recharge non limitée en courant peut néanmoins être mise en oeuvre aussi dans le câblage des éventuels connecteurs du côté du dispositif et/ou dans celui des éventuels changeurs de type de connecteur pour permettre l'utilisation de câbles complètement standards si nécessaire.
**La** **figure 16** illustre un câble 161 effectuant directement le changement de type de connecteur et de tension.
   Il s'agit d'un exemple de mise en oeuvre du changeur de tension selon l'invention qui permet d'abaisser de manière simple et efficace la tension fournie par le dispositif lorsque celle-ci est proche de celle à fournir à l'appareil portable. La solution proposée repose sur l'utilisation d'une ou de plusieurs diodes (162, 163, 164) montées en série dans la branche positive du circuit et l'ensemble est surmoulé pour former le connecteur complet 165. Les chutes de tensions directes aux bornes de ces dipôles unitaires que sont les diodes (162, 163, 164), à raison de 0,6V par diode standard au silicium (162, 163) et de 0,2V par diode Schottky (164), permet de fournir une tension de l'ordre de 3,6V à l'appareil portable à partir de la tension de 5V fournie par le dispositif.
**La** **figure 17** illustre un changeur de type de connecteur et de tension.
   C'est exemple illustre un mode de réalisation particulièrement économique d'un changeur de standard avec abaisseur de tension selon l'invention 171. Dans ce cas il s'agit de fournir à un téléphone portable à partir de la tension de 5V du dispositif, un courant de charge de 355mA à une tension de 3,8V; cette tension de 3,8V étant dans la tolérance pour une tension nominale prévue de 3,7V pour le modèle de téléphone concerné. On utilise par exemple deux diodes économiques de la série 1N4001 (172, 173) qui sont capables de supporter un courant permanent et une tension supérieure au besoin de l'application. Le montage d'une diode dans chaque branche de l'alimentation et l'utilisation directe des fils de la version traversante de ces diodes pour réunir les contacts appropriés des deux connecteurs permet de réaliser la circuiterie électrique sans élément supplémentaire et il n'y plus qu'à surmouler cet ensemble dans de la matière plastique appropriée pour réaliser l'accessoire changeur de type de connecteur et de tension selon l'invention. Avantageusement, les contacts non utilisés 174 des connecteurs peuvent ne pas être montés. Le connecteur 175 du côté du câble est avantageusement conçu pour un montage en force du connecteur du câble dans le but de réaliser un assemblage qui résiste à une simple traction sur le câble.
**La** **figure 18** illustre ledit second sous-ensemble, recharge par contacts.
   Le second sous-ensemble est conçu spécifiquement pour un modèle d'appareil portable donné afin de rendre standard au moins ses caractéristiques en relation avec à la recharge. Ledit second sous-ensemble comprend des moyens aptes à apporter la standardisation qui est recherchée relativement à la recharge, ces moyens étant rendus solidaires de l'appareil portable d'une manière qui dépend de ses propres caractéristiques. Un moyen qui convient à la plupart des appareils portable et d'inclure les moyens et les fonctions dudit second sous-ensemble selon l'invention dans le cadre d'un sur-habillage de protection que de nombreux utilisateurs achètent naturellement pour sa fonction de protection et de leur appareil portable et le cas échéant en faisant entrer en ligne de compte des considérations esthétiques ou de différentiation visuelle pouvant être particulièrement utiles pour repérer plus facilement son propre appareil au sein d'une pluralité dans le cas d'un modèle courant. Le sur-habillage selon l'invention est avantageusement réalisé dans une matière extensible telle qu'un matériau élastomère. La solution en matière extensible convient particulièrement bien aux appareils portables monoblocs mais moins bien ou pas du tout aux appareils portables comprenant des éléments mobiles tels qu'un clavier coulissant ou tournant ou encore les appareils portables en forme de coquillage comprenant deux parties articulées. Pour ces appareils, le sur-habillage doit être partiel ou comprendre le nombre de parties et d'articulations qui conviennent pour s'adapter aux caractéristiques mécaniques de l'appareil portable et aux mouvements relatifs des parties qui le composent. Pour rendre solidaire tout ou partie des éléments du sur-habillage des parties correspondantes de l'appareil portable lorsqu'il n'est pas possible d'utiliser des retours de la matière extensible pour assurer un maintien suffisant, il est prévu d'utiliser des adhésifs dits repositionnables qui permettent un démontage ultérieur sans abîmer les surfaces préalablement collées.
Il est prévu de proposer des collections de variantes de couleurs et/ou de motifs et/ou de dessins pour répondre au besoin de différentiation visuelle rapide qui est utile notamment dans le cas des modèles d'appareils les plus courants. Il est prévu de minimiser l'accroissement volumique de l'appareil portable sur-habillé par rapport à la version nue de l'appareil considéré. Cela étant il est prévu des variantes de sur-habillage, notamment destinées aux enfants ou encore pour des usages professionnels, des versions de sur-habillage dont le volume externe est sensiblement plus important que celui de l'appareil nu pour offrir en outre une fonction de protection renforcée contre les chocs et les chutes de l'appareil. Au minimum, les moyens mis en oeuvre dans ledit second sous-ensemble comprennent ceux qui sont nécessaires pour assurer la continuité des circuits électriques entre les contacts prévus dans le cadre de l'interface avec ledit premier sous-ensemble. Ces moyens comprennent les contacts appropriés, le connecteur apte à la connexion avec les circuits de charge de l'appareil portable et selon la distance séparant les dits contacts du connecteur de l'appareil portable, des moyens pour assurer la continuité des circuits proprement dits. Il peut s'agir de solutions de câblage à base de fils de faible encombrement ou de conducteurs imprimés sur des surfaces en matière plastique flexible. En particulier lorsque le connecteur approprié de l'appareil portable n'est pas situé du même côté que lesdits contacts de l'interface avec le premier sous-ensemble, il est prévu que le connecteur faisant partie dudit second sous-ensemble ait une partie saillante réduite voir inexistante lorsque le connecteur est inséré dans l'embase correspondante de l'appareil portable. Lorsqu'il est nécessaire de déconnecter cet assemblage, par exemple pour remplacer le sur-habillage, il est prévu de pouvoir le faire par des moyens d'accrochage, pour des outils courants, sur le connecteur du second sous ensemble ou encore en exerçant une traction sur les moyens mis en oeuvre pour assurer la continuité des connexions. Ce mode opératoire est approprié même s'il occasionne un risque de rupture d'un ou de plusieurs circuits électriques compte tenu qu'il s'agit le plus souvent de remplacer le sur-habillage et qu'en tout état de cause cet accessoire est le plus souvent peu couteux. Dans les versions luxueuses de sur-habillage qui sont également prévues dans le cadre de la mise en oeuvre de l'invention, des moyens permettant une extraction sans risque de l'appareil portable est proposé. Il faut entendre par version luxueuse, des versions caractérisées par la qualité élevée et/ou le caractère précieux des matériaux mis en oeuvre et/ou le fait qu'il s'agisse d'un accessoire griffé d'une marque de luxe. Bien que l'alimentation du second sous-ensemble soit prévue dans le cadre de l'invention, il est plus aisé de mettre en oeuvre des moyens pour fournir une tension continue dans le dispositif. Dans le cas d'une tension continue, l'interface entre lesdits premier et second sous-ensembles est polarisée. Dès lors il est prévu des moyens de protection contre les inversions de polarité et des moyens pour rendre ledit second sous-ensemble insensible à la polarité de la tension qui l'alimente. Les premiers moyens reposent sur une asymétrie des éléments mécaniques mis en oeuvre ou encore des éléments en rapport avec les contacts électriques entre les premier et second sous-ensembles. Lorsqu'une protection sûre ne peut être obtenue par l'agencement de la mécanique des sous-ensembles ou qu'un tel agencement présente un surcoût non-négligeable ou encore qu'il nuit à l'esthétique, alors il est prévu l'ajout d'une diode de blocage en cas d'inversion de polarité qui est montée en série dans le circuit d'alimentation au sein dudit second sous-ensemble. Au prix de quatre diodes montées en pont redresseur, le second sous-ensemble devient indifférent à polarité de la connexion entre les deux sous-ensembles et la recharge est assurée dans tous les cas. Bien entendu, dans le cas de l'ajout de diodes dans le ou les circuits, il est prévu de tenir compte des chutes de tension qu'elles introduisent pour déterminer la valeur de la tension de la source d'alimentation du dispositif pour fournir la tension attendue par l'appareil portable pour sa recharge.
Dans l'exemple de la figure 18, il s'agit d'un sur-habillage 181 comprenant deux parties adaptées au cas d'un modèle de téléphone portable équipé d'un clavier coulissant. Outre les fonctions liées à la recharge de l'appareil portable, le sur-habillage comprend des moyens pour restituer des ressources d'origine de l'appareil portable que sont des boutons de commande 182 et une caméra 183. Les moyens mis en oeuvre pour la restitution de ressources d'origine de l'appareil dans le second sous-ensemble sont ici des trous pratiqués dans la paroi du sur-habillage. Il est prévu que les trous dans la paroi du sur-habillage soient sensiblement plus larges que la ressource d'origine à restituer pour tenir compte de variations possibles dans les assemblages en particulier dans le cas de l'utilisation de matières souples et extensibles.
Il est prévu de surcroît que le second sous-ensemble comprend deux connecteurs supplémentaires par rapport à ceux de l'appareil portable considéré. L'un des connecteurs additionnels 184 permet de connecter des écouteurs standards équipés d'une prise jack 3,5mm standard sur ce téléphone qui ne pouvait à l'origine n'être connecté qu'à un modèle d'écouteurs prévu par le constructeur équipé d'un connecteur propriétaire. L'autre connecteur additionnel est un connecteur mini-USB 185 permettant à la fois la connexion à un ordinateur et la recharge par un chargeur standard ce qui est particulièrement utile en voyage ou encore en cas de panne du dispositif. Dans ces deux cas de connecteur additionnel, il s'agit de connecteurs standards équivalents sur le plan fonctionnel au connecteur multi-usage spécifique d'origine qui équipe l'appareil portable. La connexion au connecteur d'origine multi-usage de l'appareil portable est assurée par un connecteur 186 qui diffère d'un connecteur connu en ce qu'il n'a pas de partie faisant saillie lorsqu'il est introduit dans l'embase de l'appareil portable. Le connecteur selon l'invention est soudé à basse température sur un circuit imprimé flexible 187 qui assure la continuité des circuits électriques, pour la recharge, pour les écouteurs et pour la connexion USB, issus du connecteur jusqu'au circuit imprimé 188 supportant les connecteurs additionnels (184, 185), les contacts 189 de l'interface avec le premier sous-ensemble et le cas échéant les autres composants électroniques du second sous-ensemble. Dans le cas où des connexions à plusieurs connecteurs d'origine de l'appareil portable sont nécessaires pour accéder aux circuits requis, alors des connecteurs correspondants selon l'invention sont disposés sur le même circuit imprimé flexible ou sur un ou plusieurs circuits imprimés flexibles supplémentaires. Il est à noter que le choix du placement des contacts de l'interface avec ledit premier sous-ensemble est arbitraire, il est commode de les placer sur le petit côté du dessous dans l'orientation naturelle de l'appareil. Cela étant, on ne sort pas du cadre de l'invention dans le cas d'un autre choix de positionnement des contacts, par exemple sur un petit côté latéral dans le cas d'un appareil dont l'orientation naturelle est avec un grand côté vers le haut ou encore si les contacts sont positionnés sur la face arrière de l'appareil pour une recharge avec l'appareil posé à plat sur une surface de pose selon l'invention.
**La** **figure 19** illustre ledit second sous-ensemble, recharge par induction. La figure 19 est en tout point semblable à la figure 18 sauf sur le plan des moyens mis en oeuvre pour transférer de l'énergie électrique entre lesdits premier et second sous-ensembles. Dans l'exemple de la figure 19, au moins un inducteur secondaire est utilisé à la place des contacts électriques de la figure 18. Toutes les explications de la figure 18 restent valables pour la figure 19. Celles qui traitent spécifiquement de contacts électriques dans le cadre de la figure 18 restent valables dans le cadre de la figure 19 en remplaçant la notion de contacts par au moins un inducteur secondaire.
   Seul le problème de la polarité de l'interface ne se pose pas dans le cas de la mise en oeuvre d'inducteurs.
**La** **figure 20** illustre un premier appareil portable dans son sous-ensemble. La figure 20 illustre une autre variante de mise en oeuvre du second sous-ensemble selon l'invention. La figure 20 illustre le téléphone portable inséré dans un sur-habillage adapté. Les différences mineures par rapport aux cas décrits dans les figures précédentes sont associées au fait que cet exemple concerne un téléphone portable monobloc qui est particulièrement bien adapté au sur-habillage avec une matière extensible. Une autre différence mineure est que le connecteur multi-usage 201 de ce modèle de téléphone est placé du même côté que celui choisi pour accueillir l'interface avec ledit premier sous-ensemble comme l'illustre la coupe A-A'. Que les circuits pour la recharge de l'appareil passent par un connecteur d'alimentation 202 séparé du connecteur multi-usage 201. Ainsi, il n'est pas nécessaire de prévoir un connecteur sans saillie et un moyen flexible pour assurer la continuité des contacts électriques. Ceci peut se faire directement à partir d'un connecteur multi usage et d'un connecteur d'alimentation correspondant à celui de l'appareil portable, directement soudé sur le circuit imprimé du second sous-ensemble. En dehors des points ci-dessus, tout ce qui a été décrit pour la figure 18 en particulier ce qui concerne le sur-habillage en général et l'utilisation de contacts électriques reste vrai pour la figure 20. La transposition au cas de la mise en oeuvre de moyens de transfert d'énergie par induction est également prévu comme dans le cas de la figure 19 et avec les compléments d'explications associés.
**La** **figure 21** illustre un second appareil portable avec le second sous-ensemble. Il s'agit du second sous-ensemble de la figure 18 avec le téléphone correspondant installé à l'intérieur. La coupe B-B' montre l'emplacement du connecteur multi-usage sur le côté de l'appareil portable
**La** **figure 22** illustre un troisième appareil portable installé dans le second sous-ensemble correspondant. Ce qui distingue ce cas de ceux illustrés par les précédentes figures est que dans cette variante du second sous-ensemble, les ressources sorties haut-parleur 221 et connecteur multi-usage 222 d'origine apparaissant dans la coupe C-C' sont restitués par le second sous-ensemble en respectivement 223 et 224. Dans cet exemple, ces ressources d'origine de l'appareil sont restituées. Il est à noter que la restitution des ressources d'origine peut avantageusement s'accompagner d'améliorations sans sortir du cadre de l'invention. Dans cet exemple, les sorties haut-parleur sont améliorées. Il s'agit d'une amélioration fonctionnelle obtenue par renvoi du son vers l'utilisateur grâce à des conduits coudés à l'intérieur du second sous-ensemble. Le connecteur multi-usage est restitué à l'identique pour permettre la connexion de tous les accessoires prévus pour cet appareil portable. Un connecteur standard 225 supplémentaire a cependant été ajouté pour permettre l'utilisation d'un câble USB et/ou d'un chargeur standard comme alternative aux accessoires d'origine.
**La** **figure 23** illustre un quatrième appareil portable installé dans le second sous-ensemble correspondant. Ce qui distingue ce cas de ceux illustrés par les précédentes figures est que dans cette variante du second sous-ensemble, la nouvelle ressource d'origine qui est restituée outre le connecteur multi-usage est l'ensemble des caractéristiques dimensionnelles de l'extrémité de l'appareil portable. La coupe D-D' montre que la section 231 du petit côté du bas de l'appareil est identique à celle de l'extrémité du second sous-ensemble 232. Ceci est avantageux pour les modèles d'appareils portables pour lesquels il existe des accessoires comprenant une forme creuse pour recevoir l'appareil avec le cas échéant un connecteur complémentaire à celui de l'appareil portable au fond de la forme creuse.
Ainsi, le second sous-ensemble selon l'invention peut équiper l'appareil portable de manière parfaitement transparente vis-à-vis de l'environnement de ce dernier.
**La** **figure 24** illustre un cinquième appareil portable qui dans cet exemple est une console de jeu. Il est prévu dans cette variante que l'interface entre lesdits premier et second sous-ensembles de l'adaptateur selon l'invention soit placée sur l'un des petits côtés de l'appareil. Cette caractéristique implique que l'appareil est orienté pour sa recharge perpendiculairement à son orientation naturelle. C'est avantageux dans le cadre de l'invention en ce que cela diminue la surface utilisée par appareil à recharger sur le dispositif.
Il n'y a en outre pas d'inconvénient au changement d'orientation dans le cadre de la recharge par l'intermédiaire d'un second sous-ensemble selon l'invention en ce que ce type d'appareil n'est en général pas utilisé lorsqu'on le recharge. C'est d'ailleurs un autre avantage de la restitution ou de la fourniture additionnelle par ledit second sous-ensemble d'au moins un connecteur pour la recharge de l'appareil. La possibilité de recharger l'appareil par l'intermédiaire d'un câble permet le cas échéant de recharger un appareil tout en l'utilisant sans limitation de durée. Dans cet exemple,
des ressources d'origines de l'appareil sont restituées par le second sous-ensemble, sous forme de trous 245 pour permettre l'accès à des connecteurs de l'appareil, sous forme d'un conducteur de lumière 243 pour restituer le voyant 244 de l'appareil, sous forme d'un connecteur supplémentaire 247 identique à celui d'origine 246 pour permettre l'alimentation par l'intermédiaire d'un câble et sous forme d'une pièce mobile 241 s'engrenant dans le bouton d'origine 242 de l'appareil qui n'est plus accessible pour restituer sa fonction sur le second sous-ensemble.
**La** **figure 25** illustre l'appareil de la figure 24 dans une autre variante de second sous-ensemble respectant l'orientation naturelle de l'appareil pour sa position de recharge. Dans cet exemple, le second sous-ensemble n'enveloppe que partiellement l'appareil portable en laissant des zones évidées 251.
**La** **figure 26** illustre un premier mode de réalisation du système selon l'invention permettant la recharge d'une pluralité d'appareils portables de modèles distincts ou en tout ou partie identiques. La recharge s'effectuant au moins pour une partie des appareils de manière simultanée. En effet, selon un raffinement de l'invention, lorsque les capacités maximales en puissance de la source d'alimentation du dispositif sont atteintes, la charge des appareils restant à recharger s'effectue en mode séquentiel. Cet exemple illustre une variante comprenant plusieurs emplacements de tailles différentes pour couvrir la plupart des besoins sans pour autant maximiser la taille de chaque emplacement pour leur permettre à tous de recevoir les appareils les plus volumineux. Des moyens de guidage réglables 261 permettent d'adapter la largeur des emplacements de recharge à celle des appareils portables, d'autres moyens comme par exemple une lame en matière flexible formant ressort permettent d'adapter chaque emplacement à l'épaisseur de l'appareil. Des prises 15 pour y connecter des premiers sous-ensembles sous forme de câbles sont avantageusement comprise dans le dispositif pour pouvoir recharger des appareils supplémentaires ou des appareils ne rentrant pas dans les emplacements prévus.
**La** **figure 27** illustre un second mode de réalisation du système qui se différentie de celui de la figure 26 par une orientation des emplacements de recharge qui est perpendiculaire à l'axe principal du dispositif. Dans cet exemple, les emplacement de recharges ont tous la même largeur maximale et sont équipés d'un voyant 271 pour indiquer leur état fonctionnel. Dans cette variante, les moyens de guidage réglables en fonction d'au moins la largeur de chaque appareil portable n'exercent aucune pression sur l'appareil.
   Il est prévu dans certaine variantes sophistiquées que des moyens contrôlables électriquement pour maintenir l'appareil au fond de son emplacement lors de la recharge libèrent l'appareil lorsque la charge est considérée comme terminée.

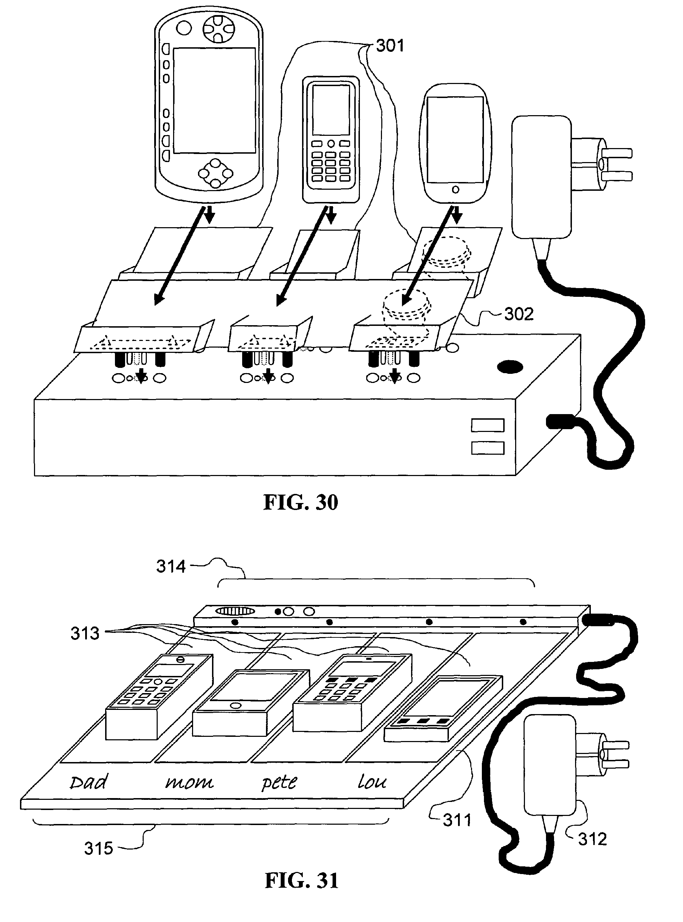

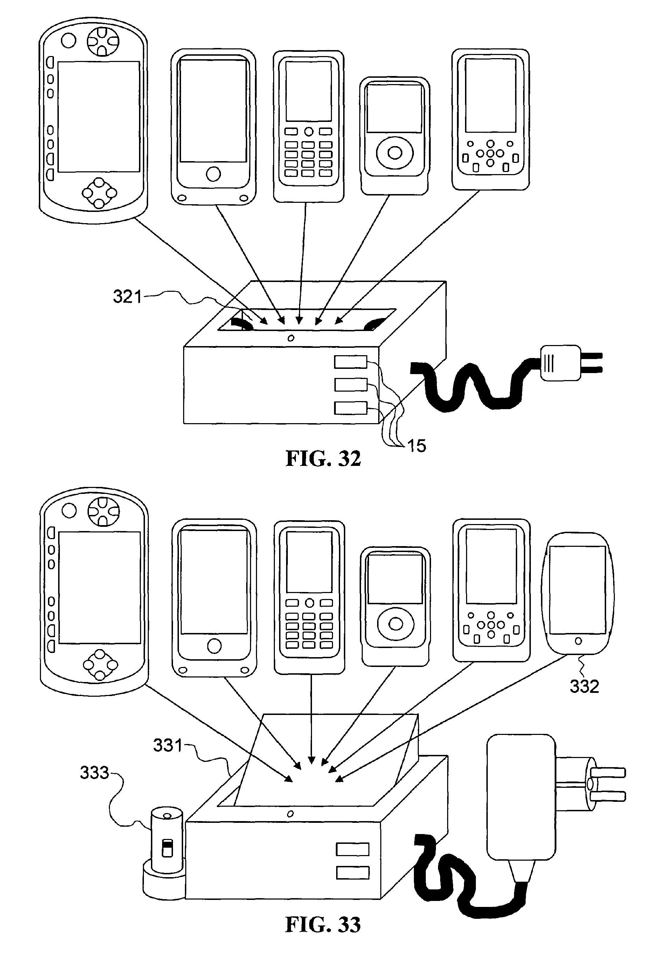

**La** **figure 28** illustre un troisième mode de réalisation du système qui se différentie de celui de la figure 27 par un des emplacements de recharge comprenant un système d'adaptation aux dimensions de l'appareils portables ne nécessitant aucun réglage de la part de l'utilisateur. Des moyens 281 exerçant une pression dans la direction opposée à leur face d'attache placent automatiquement l'appareil portable en position de recharge lors de son insertion. Par l'effet combiné des forces exercées par les moyens de positionnement automatique et des forces de friction de ces moyens sur le second sous-ensemble et/ou sur l'appareil portable, les appareils sont maintenus d'une manière sûre en position de recharge. Cette caractéristique rend cette variante particulièrement avantageuse pour les usages véhiculaires. Cet exemple de réalisation illustre en outre le cas d'une source d'énergie autonome 282 comprise dans le dispositif. Ainsi après un charge préalable de la source autonome par le raccordement du dispositif à une source d'énergie externe pendant le temps nécessaire, le dispositif est apte à recharger l'au moins un appareil portable en toute autonomie jusqu'à épuisement des capacités de stockage de la source d'énergie embarquée. Cet exemple illustre aussi les capacités de raccordement du dispositif à toute source d'énergie extérieure pour recharger l'au moins un appareil portable et la source d'énergie embarquée le cas échéant. Par exemple le raccordement à un panneau photovoltaïque 283, au réseau électrique basse tension 284 ou à un réseau véhiculaire très basse tension ici au moyen d'un connecteur adapté aux prises d'allume cigare 285.
**La** **figure 29** illustre un quatrième mode de réalisation du système dans lequel les emplacements pour la recharge 291 sont des emplacements dédiés à des modèles d'appareils portables donnés et possèdent des caractéristiques dimensionnelles et le cas échéant électriques qui sont parfaitement adaptées à chacun d'entre eux.
**La** **figure 30** illustre un système avec des interfaces amovibles. Cet exemple diffère de celui de la figure 29 en ce que les emplacements de recharges dédiés à des modèles d'appareils portables donnés sont amovibles. La variante du dispositif correspondant étant agencée pour autoriser un grand nombre de combinaisons de montage et/ou de modèles d'emplacement de recharge amovibles. Il est prévu en outre que les emplacements de recharge amovibles soient fournis sous la forme d'un objet 301 pour recevoir un appareil portable unique et/ou sous la forme d'un objet 302 pour recevoir plusieurs appareils portables identiques ou différents pour au moins une partie d'entre eux. Cette dernière solution étant avantageuse pour certaines marques proposant une gamme d'appareils complémentaires, la possession de l'emplacement pour plusieurs appareils d'une marque donnée peut inciter l'utilisateur à acquérir d'autres appareils de cette marque. L'emplacement de recharge prévu pour plusieurs appareils est bien adapté aussi à une distribution d'appareils portables sous forme de lots de plusieurs appareils.
**La** **figure 31** illustre un système plan comprenant une surface de pose. Dans cette variante avantageuse, la surface de pose 311 est la seule partie visible du système selon l'invention, la partie encombrante du dispositif qui assure en outre l'isolation galvanique nécessaire à la sécurité électrique du dispositif étant matérialisée par un boitier prise 312 ou un boitier possédant un cordon d'alimentation. Cette partie technique du système selon l'invention pouvant rester avantageusement cachée. Cet exemple illustre une variante de mise en oeuvre de l'invention sous forme extra-plate comprenant un plan de pose sur lequel sont indiquées des zones de recharge 313 où poser les appareils portables, le plus souvent sur leur face arrière. Il est prévu que les fonctions du système pour la recharge de l'au moins un appareil portable soient avantageusement complétées par des moyens 314 et des fonctions en relation avec les messages vocaux. Dans ce cas, la signalisation de l'affectation des zones de recharges à des utilisateurs donnés est avantageuse en ce qu'elle permet une gestion individualisée des messages vocaux. Cette différentiation par utilisateur peut aussi être utilisée en association avec un paramétrage de caractéristiques techniques nécessitant la reconnaissance même indirecte et non certaine d'un appareil portable donnée par le dispositif. L'indication des utilisateurs peut reposer sur tout moyen comme par exemple des pictogrammes autocollants ou le marquage direct des noms des utilisateurs 315 auxquelles les zones de recharge sont affectées.
**La** **figure 32** illustre un premier système de recharge universel séquentiel.
   Cette variante de mise en oeuvre de l'invention diffère des précédentes en ce que le dispositif ne comprend qu'un seul emplacement pour la recharge. Dans ces conditions, les recharges de plusieurs appareils d'un modèle identique ou de modèles différents se font les unes à la suite des autres. Cela étant, la fourniture d'au moins un prise 15 et/ou d'une interface appropriée pour recharger des appareils avec ou sans superviseur de charge ou encore pour rechercher des accumulateurs en tant que tels permet de réintroduire une capacité de recharge simultanée de plusieurs appareils le cas échéant. Dans cet exemple, il est particulièrement avantageux de proposer un emplacement pour la recharge 321 apte à recevoir le plus grand nombre de modèles d'appareils portables et ceci sans nécessiter de réglage préalable du dispositif ni même de commande manuelle de mise en marche ; cette dernière pouvant avantageusement être gérée automatiquement par de moyens appropriés pour détecter une nouvelle introduction d'un appareil portable dans l'emplacement de recharge.
**La** **figure 33** illustre un second système de recharge universel séquentiel.
   Cet exemple diffère de celui illustré par la figure 32 par sa nature encore plus universelle. L'emplacement pour la recharge, qui est en fait une surface de pose prévu pour un seul appareil, et qui est inclinée pour utiliser la force de gravité appliquée sur la masse de l'appareil portable et le cas échéant sur la masse dudit second sous-ensemble associé permet le maintien en position de charge de tout appareil dont les contacts électriques et/ou l'au moins un inducteur sont situés indifféremment dans le socle pour une recharge par le fond ou sur la face arrière pour une recharge par l'arrière. Dans cet exemple, le dispositif comprend en outre une interface pour un appareil portable simple qui est ici une lampe torche à leds comprenant un accumulateur maintenu en charge par le dispositif selon l'invention. La lampe est en outre avantageusement dotée d'une partie fluorescente ou phosphorescente ou encore de moyens de signalisation entrant en action lorsque l'alimentation secteur est coupée et /ou qu'elle est dans le noir pour repérer facilement la lampe en absence de lumière. Une source d'éclairage autonome qui est toujours prête à fonctionner, visible en toutes circonstances, placée à un endroit facile d'accès connu de tous les utilisateurs est un complément fonctionnel particulièrement utile dans le cadre d'un usage domestique du système selon l'invention.

Bien entendu, l'invention n'est pas limitée aux exemples de mise en oeuvre qui viennent d'être décrits, de nombreux aménagements peuvent être apportés à ces exemples sans sortir du cadre de l'invention, notamment en ce qui concerne le nombre, le type et la position des connecteurs, l'interface avec l'utilisateur et les standards cités qui vont nécessairement changer au cours de la vie du brevet. Toute combinaison de caractéristiques techniques prise dans les exemples et les illustrations pour créer des nouvelles variantes non décrites explicitement se situe dans le champ de l'invention de même que toute mise en oeuvre de l'invention comprenant des moyens et/ou des fonctionnalités supplémentaires.

## Revendications

1. Système universel pour recharger au moins un appareil portable, **caractérisé en ce qu'**il comprend :
- Un dispositif pour recharger au moins un appareil portable par la fourniture d'énergie électrique; et
- Au moins un adaptateur pour transférer de manière discontinue de l'énergie électrique dudit dispositif à l'au moins un appareil portable.

2. Système selon la revendication 1, **caractérisé en ce qu'**il comprend en outre des moyens de guidage et/ou de maintien spécifiques ou adaptables aux dimensions de l'au moins un appareil portable pour assurer un positionnement de ce dernier qui soit apte à la recharge.

3. Système selon l'une quelconque des revendications précédentes, **caractérisé en ce qu'**il comprend en outre au moins un enrouleur de câble et/ou un logement pour dissimuler la longueur excédentaire d'au moins un câble.

4. Système selon l'une quelconque des revendications précédentes, **caractérisé en ce qu'**il comprend en outre une surface de pose pour recevoir les appareils portables à recharger.

5. Système selon l'une quelconque des revendications précédentes, **caractérisé en ce qu'**il comprend en outre des moyens pour enregistrer et/ou pour reproduire et/ou pour gérer des messages vocaux.

6. Système selon la revendication 5, **caractérisé en ce qu'**il comprend en outre des moyens pour reconnaitre automatiquement le destinataire d'un message vocal lors de la mise en charge de l'appareil portable qui lui est associé, la mise en charge de l'appareil portable provocant en outre la lecture automatique d'au moins un message vocal préalablement enregistré à l'intention du destinataire reconnu.

7. Système selon l'une quelconque des revendications précédentes, **caractérisé en ce que** ledit dispositif comprend des moyens pour déconnecter au moins une alimentation utilisée pour recharger l'au moins un appareil portable lorsque l'au moins un appareil portable en relation avec l'au moins une alimentation considérée n'est pas en charge ou que sa recharge est considérée comme terminée.

8. Système selon l'une quelconque des revendications précédentes, **caractérisé en ce que** ledit dispositif comprend en outre une temporisation additionnelle de maintien en charge qui diffère l'instant de la déconnexion effective à partir de l'instant de la détection des conditions de la déconnexion.

9. Système selon l'une quelconque des revendications précédentes, **caractérisé en ce que** ledit dispositif est agencé pour déconnecter automatiquement l'au moins une alimentation utilisée pour recharger l'au moins un appareil portable lorsque la puissance consommée par la charge correspondante dépasse un seuil préalablement déterminé.

10. Système selon l'une quelconque des revendications précédentes, **caractérisé en ce que** ledit dispositif comprend en outre des moyens pour recharger l'au moins un appareil portable par la réception d'une commande et/ou par la détection automatique de la mise en charge d'au moins un appareil portable.

11. Système selon l'une quelconque des revendications précédentes, **caractérisé en ce que** ledit dispositif comprend en outre des moyens pour automatiser la recharge périodique d'au moins un appareil portable.

12. Système selon l'une quelconque des revendications précédentes, **caractérisé en ce que** ledit dispositif comprend en outre des moyens pour recharger au moins un accumulateur d'énergie électrique en tant que tel et/ou au moins un appareil portable simple comprenant un accumulateur d'énergie électrique et ne comprenant pas de superviseur de charge.

13. Système selon l'une quelconque des revendications précédentes, **caractérisé en ce que** ledit dispositif comprend en outre des moyens pour assurer au moins un mode de recharge accéléré.

14. Système selon l'une quelconque des revendications précédentes, **caractérisé en ce que** ledit dispositif comprend en outre des moyens de raccordement à une source d'énergie électrique externe, ces moyens comprenant un câble équipé d'au moins un connecteur approprié réalisé par surmoulage.

15. Système selon l'une quelconque des revendications précédentes, **caractérisé en ce que** ledit dispositif comprend en outre une source d'énergie autonome.

16. Système selon l'une quelconque des revendications précédentes, **caractérisé en ce que** ledit dispositif comprend en outre une source d'alimentation à très basse tension unique apte à la recharge d'au moins un appareil portable, la tension de cette source unique étant stabilisée à une valeur la rendant apte à la recharge directe d'au moins un modèle d'appareil portable.

17. Système selon l'une quelconque des revendications précédentes, **caractérisé en ce que** ledit dispositif est agencé pour bloquer l'alimentation de tout ou partie de l'au moins un appareil portable pour rester dans les limites des capacités de ladite source d'alimentation à très basse tension unique dans le cas d'un besoin de puissance supérieur aux capacités de ladite source d'alimentation à très basse tension unique.

18. Système selon l'une quelconque des revendications précédentes, **caractérisé en ce que** ledit dispositif est agencé pour entrer dans un mode de recharge séquentiel de tout ou partie de l'au moins un appareil portable lorsque le besoin de puissance dépasse les limites des capacités de ladite source d'alimentation à très basse tension unique.

19. Système selon l'une quelconque des revendications précédentes, **caractérisé en ce que** ledit dispositif est apte à détecter au moins un effet d'une intervention de l'utilisateur dans le système ou dans son environnement de proximité, et que le dispositif est apte à modifier automatiquement son état fonctionnel en conséquence.

20. Système selon l'une quelconque des revendications précédentes, **caractérisé en ce que** l'au moins un adaptateur comprend au moins un premier sous-ensemble connecté au dispositif, ledit premier sous-ensemble étant apte à transférer de l'énergie électrique à un appareil portable par des moyens filaires comprenant au moins deux contacts et/ou par des moyens non-filaires comprenant au moins un inducteur primaire, le transfert d'énergie se faisant directement ou par l'intermédiaire d'un second sous-ensemble connecté à l'au moins un appareil portable, le second sous-ensemble comprenant au moins deux contacts et/ou au moins un inducteur secondaire.

21. Système selon l'une quelconque des revendications précédentes, **caractérisé en ce que** lesdits premier et second sous-ensembles de l'au moins un adaptateur sont agencés pour matérialiser une interface entre eux qui est apte à transférer de l'énergie électrique et qui est au moins en partie indépendante des caractéristiques spécifiques de l'au moins un appareil portable.

22. Système selon l'une quelconque des revendications précédentes, **caractérisé en ce que** les contacts et/ou les inducteurs de l'au moins un adaptateur devant coopérer sont respectivement maintenus dans une position de contact et/ou de couplage apte au transfert d'énergie électrique par l'effet d'une force.

23. Système selon l'une quelconque des revendications précédentes, **caractérisé en ce que** le maintien dudit second sous-ensemble de l'au moins un adaptateur ou de l'appareil portable exercé par une force est contrôlé par une commande électrique en relation avec l'état de la charge de l'appareil portable.

24. Système selon l'une quelconque des revendications précédentes, **caractérisé en ce que** ledit second sous-ensemble de l'au moins un adaptateur est associé à des moyens réalisant un sur-habillage au moins partiel de l'appareil portable.

25. Système selon l'une quelconque des revendications précédentes, **caractérisé en ce que** le connecteur assurant la connexion des circuits électriques dudit second sous-ensemble de l'au moins un adaptateur avec l'appareil portable a une partie saillante réduite relativement au connecteur standard correspondant lorsque le connecteur est inséré dans l'embase correspondante de l'appareil portable.

26. Système selon l'une quelconque des revendications précédentes, **caractérisé en ce que** ledit second sous-ensemble de l'au moins un adaptateur comprend en outre des moyens pour restituer au moins une ressource d'origine de l'appareil portable.

27. Système selon l'une quelconque des revendications précédentes, **caractérisé en ce que** ledit second sous-ensemble de l'au moins un adaptateur comprend au moins une ressource supplémentaire par rapport à celles de l'appareil portable considéré et/ou au moins une ressource standard équivalente sur le plan fonctionnel à au moins une ressource spécifique de l'appareil portable considéré.

28. Système selon l'une quelconque des revendications précédentes, **caractérisé en ce que** ledit second sous-ensemble de l'au moins un adaptateur comprend en outre au moins un moyen pour assurer pleinement, ou pour augmenter, l'autonomie de l'appareil portable.

29. Système selon l'une quelconque des revendications précédentes, **caractérisé en ce que** ledit second sous-ensemble de l'au moins un adaptateur comprend en outre au moins un moyen d'identification sans contact.

30. Système selon l'une quelconque des revendications précédentes, **caractérisé en ce que** les moyens mis en oeuvre dans l'au moins un adaptateur pour connecter ledit dispositif à l'au moins un appareil portable comprennent au moins un câble et au moins un connecteur réalisé par surmoulage, l'au moins un connecteur étant apte à la recharge d'au moins un modèle d'appareil portable.

31. Système selon l'une quelconque des revendications précédentes, **caractérisé en ce que** l'au moins un adaptateur comprend en outre un changeur de type de connecteur, amovible et réalisé par surmoulage, pour permettre la connexion d'un appareil portable dont le connecteur pour la recharge n'est pas compatible avec l'au moins un connecteur de l'adaptateur.

32. Système selon l'une quelconque des revendications précédentes, **caractérisé en ce qu'**au moins un des éléments de l'au moins un adaptateur réalisés par surmoulage comprend en outre une ou plusieurs diodes montées en série, dans au moins un des circuits d'alimentation, pour abaisser la tension fournie par le dispositif à une valeur déterminée qui convient pour la recharge du modèle d'appareil portable considéré.
